# EUROPEAN PATENT APPLICATION

(11) **EP 4 663 974 A1**
(43) Date of publication of application: **17.12.2025**
(21) Application number: 25178305.6
(22) Date of filing: 22.05.2025
(51) Int. Cl.: F16F 9/512, F16F 9/348, F16F 9/32

(54) **DAMPER**

(30) Priority: 14.06.2024 JP 2024096851
(71) Applicant: Yamaha Hatsudoki Kabushiki Kaisha, Iwata-shi, Shizuoka 438-8501 (JP)
(72) Inventor: SHIBAYAMA, Takuro, Iwata-shi, 438-8501 (JP); FUJIWARA, Shota, Iwata-shi, 438-8501 (JP); HARADA, Toyoji, Iwata-shi, 438-8501 (JP); OKADA, Yuki, Iwata-shi, 438-8501 (JP); KAMO, Toshiaki, Iwata-shi, 438-8501 (JP)
(74) Representative: Stöckeler, Ferdinand

(57) **Abstract**

A damper (10) includes a main piston (18) and a sub-piston (20). The main piston (18) includes a main piston main body and a first damping force generator. The sub-piston (20) includes a sub-piston main body and a second damping force generator. The second damping force generator includes a groove provided in a main surface of the sub-piston main body, a valve provided in a manner to cover the groove, and a port provided in the groove and penetrating the sub-piston main body. The valve does not make contact with the sub-piston main body. The sub-piston (20) has an orifice based on an outer diameter of the valve and an outer diameter of the groove for adjustment of a damping force when a stroke speed is in a low-speed range, and the valve has a stiffness selected for adjustment of the damping force when the stroke speed is in a high-speed range.

## Description

### BACKGROUND OF THE INVENTION

### Field of the Invention

The present invention relates to dampers, and more specifically to a damper installed in a vehicle.

### Description of the Related Art

JP 5661157 B2 discloses an example which is pertinent to conventional techniques of this kind. Fig. 13 and Fig. 14 of JP 5661157 B2 show a damper which includes a pressure pipe, a piston assembly, and a piston rod. Inside the pressure pipe the piston assembly is provided slidably. The piston assembly separates an operation chamber inside the pressure pipe into an upper operation chamber and a lower operation chamber. The piston assembly is connected with the piston rod. The piston rod extends through the upper operation chamber and an upper-end cap which closes an upper end of the pressure pipe. While the piston assembly moves inside the pressure pipe, a valve operation inside the piston assembly controls movement of a fluid between the upper operation chamber and the lower operation chamber.

The piston assembly has a compression valve assembly, a valve main body, and a reaction valve assembly. These members are disposed in this order from the top. The compression valve assembly is attached to a stepped portion of the piston rod. The valve main body is attached to the compression valve assembly. The reaction valve assembly is attached to the valve main body. In other words, the valve main body is sandwiched by the compression valve assembly and the reaction valve assembly. The valve main body defines a plurality of compression fluid paths and a plurality of reaction fluid paths.

The compression valve assembly has a piston, a speed detection valve disk, a spacer, a retainer, and a plurality of valve disks. These members are disposed in this order from the top. The plurality of valve disks make contact with the valve main body to close the compression fluid paths. The speed detection valve disk makes contact with a disk seat disposed on the piston, thereby creating a gap between itself and the piston. The gap between the speed detection valve disk and the piston defines a fluid path, which closes gradually as the speed detection valve disk deflects toward the piston. The speed detection valve disk has a plurality of slots or openings. When the speed detection valve disk is at a closed position, the fluid flows through the slots or the openings. As the speed detection valve disk closes and the piston assembly reaches a predetermined speed, a desired amount of damping load is increased.

The reaction valve assembly has a plurality of valve disks, a retainer, and a nut. These members are disposed in this order from the top. By threading the nut around the piston rod, the retainer is pressed onto the plurality of valve disks, and simultaneously, the plurality of valve disks are pressed onto the valve main body to close the plurality of reaction fluid paths.

In the damper as described, the fluid inside the lower operation chamber is compressed during a compression stroke, exerting a fluid pressure onto the valve disks of the compression valve assembly. If the fluid pressure onto the valve disks exceeds a bending load of the valve disks, the valve disks deflect elastically, to open the compression fluid paths provided in the valve main body. This allows the fluid to flow from the lower operation chamber to the upper operation chamber. As the fluid passing through the speed detection valve disk reaches a predetermined speed, the flow comes to a limit and the fluid pressure decreases. Since the pressure on the lower operation chamber side of the speed detection valve disk is greater than the pressure on the upper operation chamber side of the speed detection valve disk, the speed detection valve disk deflects toward the piston, gradually closing the fluid path. As a result, the speed detection valve disk and the piston make contact with each other, coming to the closed position. A range of a total flow of the plurality of openings provided in the speed detection valve disk is designed to be smaller than a range of a total flow of the plurality of compression fluid paths provided in the valve main body. Therefore, as the speed detection valve disk closes the fluid path, the flow range is decreased and, accordingly, there is an increase in the generated damping force.

On the other hand, during a reaction stroke, the fluid inside the upper operation chamber is compressed, exerting a fluid pressure onto the valve disks of the reaction valve assembly. If the fluid pressure onto the valve disks exceeds the bending load of the valve disks, the valve disks deflect away from the valve main body, to open the plurality of reaction fluid paths provided in the valve main body.

According to the damper disclosed in JP 5661157 B2, in the compression stroke, the damping force is generated by opening the compression fluid paths provided in the valve main body and allowing the fluid to flow from the lower operation chamber to the upper operation chamber, while the damping force is increased by deflecting the speed detection valve disk toward the piston to close the fluid path.

However, when the fluid path is closed, the speed detection valve disk deflects toward the piston to bring an outer fringe portion of the speed detection valve disk into contact with the piston, closing the gap completely between the speed detection valve disk and the piston. In this state, the fluid passing through the piston is very little, only through the slots or the openings provided in the speed detection valve disk, causing a sharp increase in the damping force when the piston's stroke speed is in a high-speed range. Therefore, the damper disclosed in JP 5661157 B2 has room for improvement in making the damping force adjustable so that a desired damping force is obtained.

### SUMMARY OF THE INVENTION

Therefore, a primary object of the present invention is to provide a damper capable of appropriately adjusting a damping force when a sub-piston has a stroke speed ranging from a low-speed range to a high-speed range.

According to an aspect of the present invention, there is provided a damper including a cylinder having a first end portion and a second end portion; a main piston including a main piston main body accommodated inside the cylinder slidably in an axial direction of the cylinder and dividing an inside of the cylinder into a first oil chamber closer to the first end portion and a second oil chamber closer to the second end portion, and a first damping force generator provided in the main piston main body; a sub-piston including a sub-piston main body accommodated inside the cylinder slidably in the axial direction of the cylinder and a second damping force generator provided in the sub-piston main body; and a piston rod attached to the piston and the sub-piston, and extending in the axial direction through the first end portion and then out of the cylinder. In this arrangement, the second damping force generator includes an annular groove provided in a main surface of the sub-piston main body, a disk-like valve provided near the main surface of the sub-piston main body in a manner to cover the groove, and a port provided in the groove and penetrating the sub-piston main body. The valve is provided so that, regardless of deflection, an outer circumferential edge of the valve does not make contact with the sub-piston main body. The sub-piston has an orifice based on an outer diameter of the valve and an outer diameter of the groove for adjustment of a damping force when a stroke speed of the sub-piston is in a low-speed range, and the valve has a stiffness selected for adjustment of the damping force when the stroke speed of the sub-piston is in a high-speed range.

According to the present invention, the damping force is generated not only by the first damping force generator provided in the main piston main body, but also by the second damping force generator provided in the sub-piston main body. In the second damping force generator, the orifice of the sub-piston is set based on the outer diameter of the valve and the outer diameter of the groove. In other words, there is set an orifice area which is co-related with a gap (distance) between the outer circumferential edge of the valve and an outer wall of the groove. Now, with the orifice area when the valve has no deflection being called a static orifice area, the static orifice area becomes approximately constant when the stroke speed of the sub-piston is in the low-speed range, and it is possible to adjust the damping force accordingly. When the size of the gap, i.e., the static orifice area, is large, the damping force is small. When the static orifice area is small, the damping force is large. In addition to the above, a setting is made to the stiffness of the valve. With this, it becomes possible to adjust the stroke speed of the sub-piston at the time when the valve starts deflecting. Now, with the orifice area which varies with the deflection of the valve being called a variable orifice area, it is possible to adjust the damping force according to the variable orifice area and the stroke speed (flow speed of the hydraulic fluid) when the stroke speed of the sub-piston is in the high-speed range. Further, the outer circumferential edge of the valve does not make contact with the sub-piston main body regardless of the deflection of the valve. Therefore, even if the valve makes a deflection, the orifice of the sub-piston is not fully closed, and hence it is possible to form an all-around flow path between the valve and the sub-piston main body, and reduce a sharp increase in the damping force. Therefore, it is possible to appropriately adjust the damping force when the stroke speed of the sub-piston is from the low-speed range to the high-speed range.

Preferably, the second damping force generator further includes a support portion provided in the main surface of the sub-piston main body for supporting the valve; the support portion has a height selected for adjustment of the damping force when the stroke speed of the sub-piston is in the low-speed range, and the support portion has an outer diameter selected for adjustment of the damping force when the stroke speed of the sub-piston is in the high-speed range. In this case, the static orifice area is adjusted according to the height of the support portion, whereby the damping force is adjusted when the stroke speed of the sub-piston is in the low-speed range. If the height of the support portion is small, the gap between the outer circumferential edge of the valve and the outer wall of the groove is small, therefore the static orifice area is small, and the damping force is large. On the other hand, if the height of the support portion is large, the gap between the outer circumferential edge of the valve and the outer wall of the groove is large, therefore the static orifice area is large, and the damping force is small. An adjustment is also made to the position of a radially outward end of a region of the valve supported by the sub-piston main body, in accordance with the outer diameter of the support portion. The adjustment changes the amount of deflection of the valve with respect to the stroke speed, resulting in stiffness adjustment in essence of the valve, whereby the damping force is adjusted when the stroke speed of the sub-piston is in the high-speed range. As the outer diameter of the support portion increases, the region of the valve supported by the sub-piston main body increases and the amount of deflection of the valve decreases, resulting in increased stiffness in essence of the valve. This makes it possible to cause the change in the damping force to be more gradual with respect to the stroke speed of the sub-piston. On the other hand, as the outer diameter of the support portion decreases, the region of the valve supported by the sub-piston main body decreases and the amount of deflection of the valve increases, resulting in decreased stiffness in essence of the valve. This makes it possible to increase the change in the damping force with respect to the stroke speed of the sub-piston.

Further, preferably, the valve has an outer diameter smaller than an outer diameter of the groove. In this case, when viewed from the axial direction of the piston rod, the valve does not overlap an outer circumferential edge of the groove, and thus there is formed the annular orifice, i.e., the orifice which circles all around the circumference. If the annular orifice has a large width, the static orifice area is large, and the damping force is small when the stroke speed of the sub-piston is in the low-speed range. On the other hand, if the annular orifice has a small width, the static orifice area is small, and the damping force is large when the stroke speed of the sub-piston is in the low-speed range. It should be noted here that the width of the annular orifice refers to the distance between the outer circumferential edge of the valve and the outer wall of the groove, and when the valve is not deflected, it is equal to a distance between the outer circumferential edge of the valve and the outer circumferential edge of the groove, being proportional to the difference between the outer diameter of the valve and the outer diameter of the groove.

Further, preferably, the groove has an outer wall that extends closer, as the groove extends deeper, to a locus of the outer circumferential edge of the valve at a time of deflection. In this case, as the valve deflects in the depth direction of the groove, the gap between the outer circumferential edge of the valve and the outer wall of the groove becomes smaller, i.e., the variable orifice area decreases. Therefore, it is possible to increase the change in the damping force with respect to the stroke speed when the stroke speed of the sub-piston is in the high-speed range.

Preferably, the groove has an outer wall that extends farther, as the groove extends deeper, from the locus of the outer circumferential edge of the valve at a time of deflection. In this case, as the valve deflects in the depth direction of the groove, the gap between the outer circumferential edge of the valve and the outer wall of the groove becomes larger, i.e., the variable orifice area increases. Therefore, it is possible to reduce the change in the damping force with respect to the stroke speed when the stroke speed of the sub-piston is in the high-speed range.

Further, preferably, the damper further includes a flow path formed inside the piston rod to provide communication between the first oil chamber and the second oil chamber for generation of a damping force when the stroke speed of the sub-piston is in a very-low-speed range. In this case, when the stroke speed of the sub-piston is in the very-low-speed range, the hydraulic fluid moves through the flow path which is formed inside piston rod to provide communication between the first oil chamber and the second oil chamber, making it possible to generate a damping force.

Further, preferably, the valve is closer to the first end portion of the cylinder than the sub-piston main body is. In this case, when the piston rod is in an extending motion, the hydraulic fluid inside the cylinder moves from the first end portion side to the second end portion side, to press the valve toward the sub-piston main body, making the valve deflect in accordance with the stroke speed of the sub-piston. This makes it possible to appropriately adjust the damping force at the time when the piston rod is in the extending motion.

Preferably, the valve is closer to the second end portion of the cylinder than the sub-piston main body is. In this case, when the piston rod is in a contracting motion, the hydraulic fluid inside the cylinder moves from the second end portion side to the first end portion side, to press the valve toward the sub-piston main body, making the valve deflect in accordance with the stroke speed of the sub-piston. This makes it possible to appropriately adjust the damping force at the time when the piston rod is in the contracting motion.

Further, preferably, the damper includes two of the sub-pistons. In this arrangement, the valve is closer to the first end portion of the cylinder than the sub-piston main body is in one of the sub-pistons, and the valve is closer to the second end portion of the cylinder than the sub-piston main body is in the other of the sub-pistons. In this case, when the piston rod is in the extending motion, the hydraulic fluid inside the cylinder moves from the first end portion side to the second end portion side in one of the sub-pistons, to press the valve toward the sub-piston main body, making the valve deflect in accordance with the stroke speed of the sub-piston. This makes it possible to appropriately adjust the damping force at the time when the piston rod is in the extending motion. Also, when the piston rod is in the contracting motion, the hydraulic fluid inside the cylinder moves from the second end portion side to the first end portion side in the other sub-piston, to press the valve toward the sub-piston main body, making the valve deflect in accordance with the stroke speed of the sub-piston. This makes it possible to appropriately adjust the damping force at the time when the piston rod is in the contracting motion. As described, it becomes possible to appropriately adjust the damping force at both of the times when the piston rod is in the extending/contracting motions.

The above-described object and other objects, characteristics, aspects and advantages of the present invention will become clearer from the following detailed description of embodiments of the present invention to be made with reference to the attached drawings.

### BRIEF DESCRIPTION OF THE DRAWINGS

Fig. 1 is an illustrative sectional view which shows a damper according to an embodiment of the present invention.
Fig. 2 is an enlarged illustrative sectional view which shows a main piston, a sub-piston and surrounds thereof in Fig. 1.
Fig. 3A is a plan view which shows a state where a valve is placed on a sub-piston main body in Fig. 1, and Fig. 3B is a plan view which shows the sub-piston main body in Fig. 1.
Fig. 4 is an enlarged illustrative sectional view which shows the sub-piston and surrounds thereof in Fig. 1.
Fig. 5 is a graph which shows damping force characteristics (all speed ranges) of the main piston + sub-piston of the damper in Fig. 1.
Fig. 6 is a graph which shows damping force characteristics (all speed ranges) of the sub-piston of the damper in Fig. 1.
Fig. 7 is a graph which shows damping force characteristics (low-speed range) of the sub-piston of the damper in Fig. 1.
Fig. 8 is a graph which shows damping force characteristics (very-low-speed range) of the sub-piston of the damper in Fig. 1.
Fig. 9 is an illustrative sectional view which shows a damper according to another embodiment of the present invention.
Fig. 10 is an enlarged illustrative sectional view which shows a main piston, a sub-piston and surrounds thereof in Fig. 9.
Fig. 11 is a graph which shows damping force characteristics (all speed ranges) of the main piston + sub-piston of the damper in Fig. 9.
Fig. 12 is a graph which shows damping force characteristics (all speed ranges) of the sub-piston of the damper in Fig. 9.
Fig. 13 is an illustrative sectional view which shows a damper according to still another embodiment of the present invention.
Fig. 14 is an enlarged illustrative sectional view which shows a main piston, a sub-piston and surrounds thereof in Fig. 13.
Fig. 15 is a graph which shows damping force characteristics (all speed ranges) of the main piston + sub-piston of the damper in Fig. 13.
Fig. 16 is a graph which shows damping force characteristics (all speed ranges) of the sub-piston of the damper in Fig. 13.
Fig. 17 is an illustrative sectional view which shows a damper according to still another embodiment of the present invention.
Fig. 18 is an enlarged illustrative sectional view which shows a main piston, a sub-piston and surrounds thereof in Fig. 17.
Fig. 19 is an enlarged illustrative sectional view which shows the sub-piston and surrounds thereof in Fig. 17.
Fig. 20 is a graph which shows damping force characteristics (all speed ranges) of the main piston + sub-piston of the damper in Fig. 17.
Fig. 21 is a graph which shows damping force characteristics (all speed ranges) of the sub-piston of the damper in Fig. 17.
Fig. 22 is a graph which shows damping force characteristics (low-speed range) of the sub-piston of the damper in Fig. 17.
Fig. 23 is a graph which shows damping force characteristics (very-low-speed range) of the sub-piston of the damper in Fig. 17.
Fig. 24 is a graph which shows damping force characteristics (all speed ranges) of the main piston + sub-piston of the damper according to another embodiment of the present invention.
Fig. 25 is a graph which shows damping force characteristics (all speed ranges) of the sub-piston of the damper according to said other embodiment of the present invention.
Fig. 26 is a graph which shows damping force characteristics (all speed ranges) of the main piston + sub-piston of the damper according to still another embodiment of the present invention.
Fig. 27 is a graph which shows damping force characteristics (all speed ranges) of the sub-piston of the damper according to said still another embodiment of the present invention.

### DETAILED DESCRIPTION OF THE PREFERRED EMBODIMENTS

Hereinafter, embodiments of the present invention will be described with reference to the drawings.

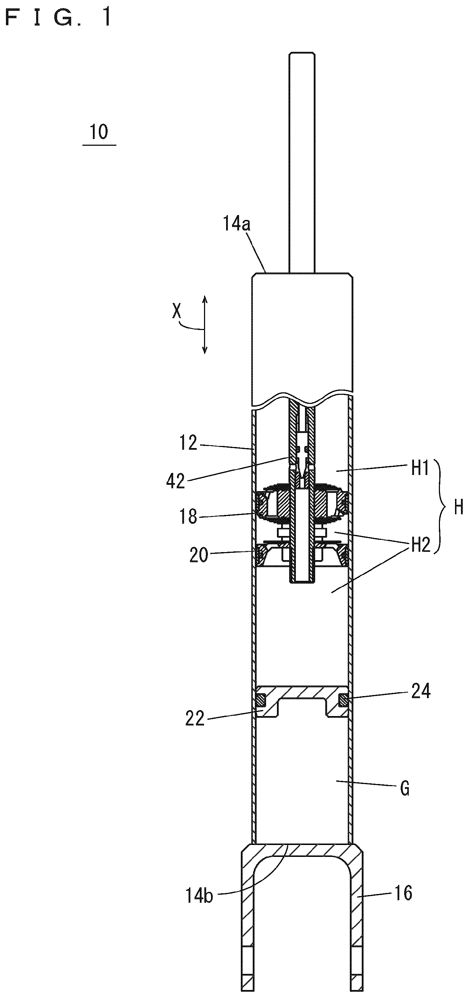

Referring to Fig. 1, a damper 10 according to an embodiment of the present invention is a single-cylinder hydraulic damper of a type where an orifice area decreases in the extending stroke. The damper 10 includes a hollow cylinder 12 having two open ends. The cylinder 12 has a first end portion 14a and a second end portion 14b. The second end portion 14b has a connection bracket portion 16 attached thereto, which closes the second end portion 14b.

The cylinder 12 accommodates a main piston 18, a sub-piston 20 and a free piston 22.

The free piston 22 divides an interior of the cylinder 12 into a gas chamber G in which a gas is filled, and an oil chamber H in which a hydraulic fluid is loaded. The gas chamber G is filled with an inert gas such as high-pressure nitrogen gas. The free piston 22 is slidable inside the cylinder 12, in an axial direction X of the cylinder 12. On an outer circumference of the free piston 22, an O ring 24 is provided around a sliding surface against the cylinder 12.

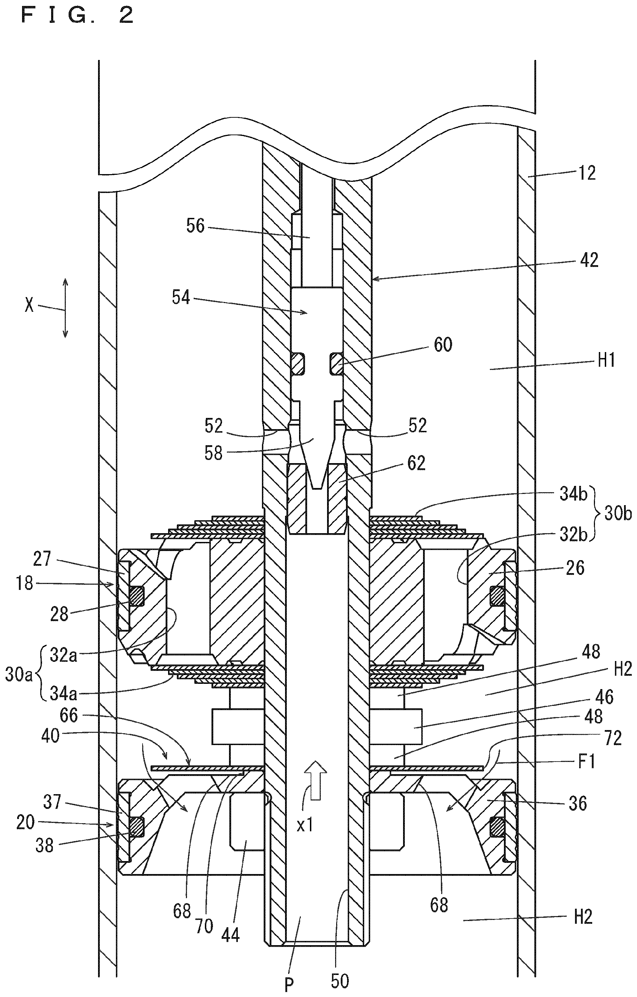

Referring also to Fig. 2, the main piston 18 includes a main piston main body 26. The main piston main body 26 divides an inside of the cylinder 12, or more specifically divides the oil chamber H, into a first oil chamber H1 which is closer to the first end portion 14a, and a second oil chamber H2 which is closer to the second end portion 14b. The main piston 18 is slidable inside the cylinder 12 in the axial direction X of the cylinder 12. On an outer circumference of the main piston main body 26, a piston ring 27 is attached to a sliding surface against the cylinder 12. An O-ring 28 is provided between the main piston main body 26 and the piston ring 27.

In the main piston main body 26, an extension-side first damping force generator 30a and a contraction-side first damping force generator 30b are provided in order to generate a damping force by allowing a hydraulic fluid to move between the first oil chamber H1 and the second oil chamber H2.

The extension-side first damping force generator 30a includes an oil path 32a and a damping valve 34a functioning as a main valve. The oil path 32a penetrates the main piston main body 26 to provide communication between the first oil chamber H1 and the second oil chamber H2. The damping valve 34a is configured by laminating a plurality of plate valves each provided by an annular thin-plate spring and having an outer diameter smaller than the previous one as it is farther down from the oil path 32a in the axial direction X, and is capable of opening/closing the oil path 32a in a main surface facing the second oil chamber H2 of the main piston main body 26. The extension-side first damping force generator 30a functions when the main piston 18 moves toward the first oil chamber H1, i.e., when the damper 10 is in an extending motion. In this case, as the hydraulic fluid in the first oil chamber H1 moves through the oil path 32a toward the second oil chamber H2, a hydraulic pressure of the hydraulic fluid inside the first oil chamber H1 exceeds an elastic urging force of the damping valve 34a, making the damping valve 34a elastically deform to open. This allows the hydraulic fluid to move through the opened oil path 32a, against an elastic resistance from the damping valve 34a. This movement of the hydraulic fluid generates a damping force, to soften an impact force exerted to the damper 10.

Likewise, the contraction-side first damping force generator 30b includes an oil path 32b and a damping valve 34b functioning as a main valve. The oil path 32b penetrates the main piston main body 26 to provide communication between the first oil chamber H1 and the second oil chamber H2. The damping valve 34b is configured by laminating a plurality of plate valves each provided by an annular thin-plate spring and having an outer diameter smaller than the previous one as it is farther up from the oil path 32b in the axial direction X, and is capable of opening/closing the oil path 32b in a main surface facing the first oil chamber H1 of the main piston main body 26. The contraction-side first damping force generator 30b functions when the main piston 18 moves toward the second oil chamber H2, i.e., when the damper 10 is in a contracting motion. In this case, as the hydraulic fluid in the second oil chamber H2 moves through the oil path 32b toward the first oil chamber H1, a hydraulic pressure of the hydraulic fluid inside the second oil chamber H2 exceeds an elastic urging force of the damping valve 34b, making the damping valve 34b elastically deform to open. This allows the hydraulic fluid to move through the opened oil path 32b, against an elastic resistance from the damping valve 34b. This movement of the hydraulic fluid generates a damping force, to soften an impact fore exerted to the damper 10.

The sub-piston 20 is provided between the main piston 18 and the free piston 22 near the main piston 18 inside the second oil chamber H2. The sub-piston 20 includes a sub-piston main body 36. The sub-piston main body 36 is slidable inside the cylinder 12 in the axial direction X of the cylinder 12.

On an outer circumference of the sub-piston main body 36, a piston ring 37 is attached to a sliding surface against the cylinder 12. An O-ring 38 is provided between the sub-piston main body 36 and the piston ring 37.

In the sub-piston main body 36, there is provided an extension-side second damping force generator 40 in order to generate a damping force by allowing the hydraulic fluid to move through the sub-piston main body 36. The second damping force generator 40 will be described in detail later.

Inside the cylinder 12, a piston rod 42 is attached to the main piston 18 and the sub-piston 20. In other words, the main piston 18 and the sub-piston 20 are fixed to the first end region of the piston rod 42 with a nut 44. A plain washer 46 and two control washers 48 are placed between the main piston 18 and the sub-piston 20. The plain washer 46 is sandwiched by the two control washers 48.

The piston rod 42 extends in the axial direction X through the first end portion 14a of the cylinder 12, and out of the cylinder 12. More specifically, the piston rod 42 is inserted through a rod guide (not illustrated) which is placed near the first end portion 14a inside the cylinder 12, guided thereby, and extends out of the cylinder 12. A slide metal (not illustrated) is placed between the rod guide and the piston rod 42. This makes the piston rod 42 slidable with respect to the rod guide. Also, the rod guide has a sealing member (not illustrated) on its side facing the main piston 18, sealing between the cylinder 12 and the piston rod 42 to prevent the oil from leaking out of the first oil chamber H1.

The piston rod 42 is formed with a through-hole 50 penetrating the piston rod 42 in the axial direction X. In the piston rod 42, there is formed a plurality of communication holes 52 which provide communication between the through-hole 50 and the first oil chamber H1 in a perpendicular direction to the axial direction X. Therefore, the first oil chamber H1 and the second oil chamber H2 communicate with each other via the through-hole 50 and the communication holes 52. A flow path P inside the piston rod 42 is constituted by the communication holes 52 and a region of the through-hole 50 lower than the communication holes 52, providing communication between the first oil chamber H1 and the second oil chamber H2. When the sub-piston 20 is moving at a stroke speed within a very-low-speed range, the hydraulic fluid moving through the flow path P generates a damping force.

Inside the through-hole 50, a damping force adjusting valve 54 is movable in the axial direction X. The damping force adjusting valve 54 includes a shaft portion 56 and a valve portion 58 provided at a tip end of the shaft portion 56. On an outer circumference portion of the valve portion 58, an O ring 60 is attached in slidable contact with an inner circumferential surface of the through-hole 50.

Further, a cylindrical stopper 62 is fixed to a location lower than the communication holes 52 inside the through-hole 50. To the stopper 62, the valve portion 58 is placed linearly movably in advancing/retracting directions between a fully-closed position and a fully opened position. As the valve portion 58 moves linearly in advancing/retracting directions, a flow path area between the valve portion 58 and the stopper 62 in the flow path P varies. The shaft portion 56 has an upper end portion, to which a control member (not illustrated) is connected. The control member is provided at the upper end portion of the piston rod 42. As the control member is rotated, the damping force adjusting valve 54 moves linearly in advancing/retracting directions in the axial direction X, whereby the damping force at the time of extending motion and contracting motion is controlled. It is also possible to control the damping force by varying a flow path area inside the piston rod 42 where the stopper 62 is not provided (cross-sectional area of the flow path P).

Next, the second damping force generator 40 will be described.

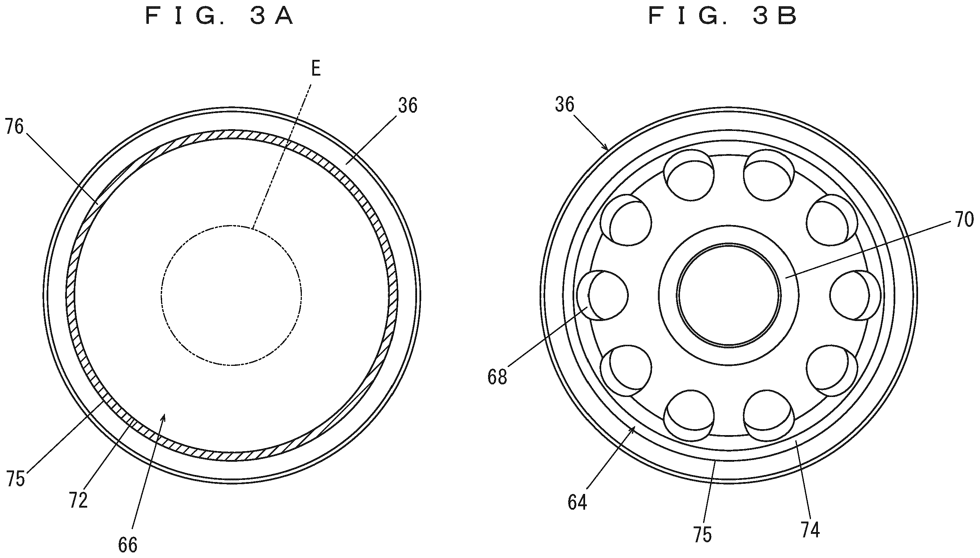

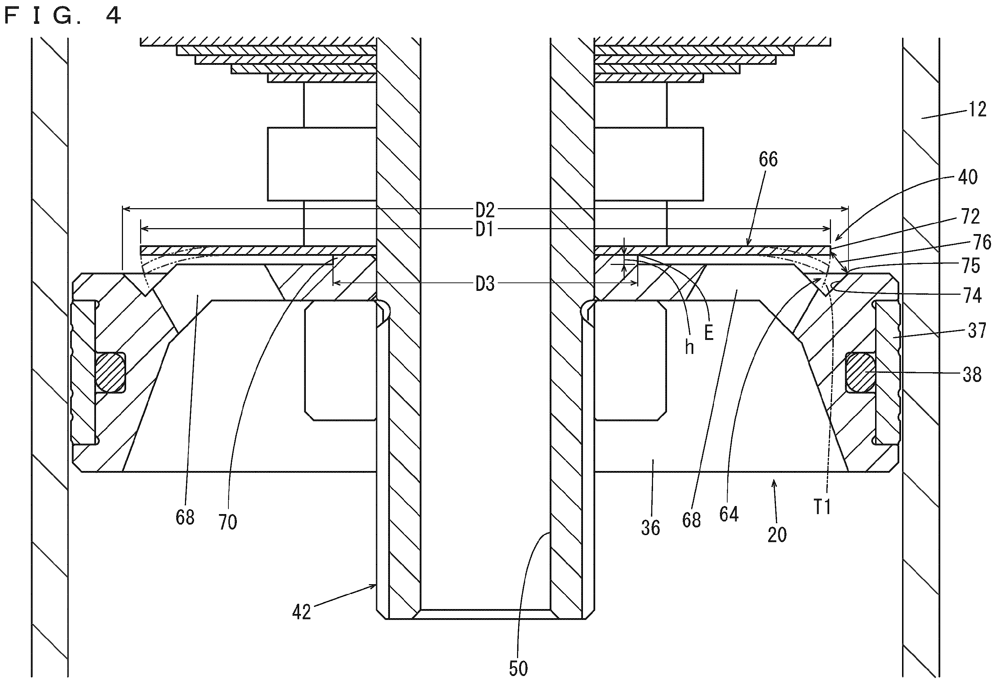

Referring also to Fig. 3A, Fig. 3B and Fig. 4, the second damping force generator 40 includes an annular groove 64 provided in a main surface of the sub-piston main body 36, a valve 66 provided near the main surface of the sub-piston main body 36 in a manner to cover the groove 64 and serving as a disk-like sub-valve, a plurality (ten in the present embodiment) of ports 68 provided in the groove 64 and penetrating the sub-piston main body 36, and a support portion 70 provided in the main surface of the sub-piston main body 36 in order to support the valve 66. The support portion 70 is formed as an annular stepped portion. The groove 64, the valve 66 and the support portion 70 are provided coaxially with each other. The plurality of ports 68 are disposed at an interval in a circumferential direction so as to partially overlap the groove 64 when viewed from above in the axial direction X. Each port 68 leads to the groove 64 obliquely inward from top to bottom. The valve 66 is closer to the first end portion 14a of the cylinder 12 than the sub-piston main body 36.

The valve 66 has an outer diameter D1 smaller than an outer diameter D2 of the groove 64. An outer circumferential edge 72 of the valve 66 does not make contact with the main surface of the sub-piston main body 36 and the groove 64 regardless of the deflection of the valve 66. In the present embodiment, the groove 64 has an outer wall 74 obliquely inward from top to bottom so as to come closer as the groove 64 extends deeper, to a locus T1 of the outer circumferential edge 72 of the valve 66 at a time of the deflection.

For adjustment of the damping force when the stroke speed of the sub-piston 20 is in a low-speed range, an orifice 76 of the sub-piston 20 is set based on the outer diameter D1 of the valve 66, the outer diameter D2 of the groove 64, and a height h of the support portion 70. The orifice 76 refers to a gap between the outer circumferential edge 72 of the valve 66 and the outer wall 74 (including an outer circumferential edge 75) of the groove 64, and in the present embodiment, is formed annually, i.e., all around the circumference (see Fig. 3A, Fig. 3B and Fig. 4). The term area of the orifice 76 (orifice area) refers to a total area of the annular gap between the outer circumferential edge 72 of the valve 66 and the outer wall 74 of the groove 64. Also, for adjustment of the damping force when the stroke speed of the sub-piston 20 is in a high-speed range, a stiffness of the valve 66 and the outer diameter D3 of the support portion 70 are set. The second damping force generator 40 functions when the damper 10 is in the extending motion. When the sub-piston 20 moves in Direction x1, the hydraulic fluid moves in Direction F1.

The damper 10 as has been described is installed, for example, in a vehicle (not illustrated), with the upper end portion of the piston rod 42 attached to the car body (not illustrated) side and the connection bracket portion 16 attached to the wheel (not illustrated) side.

Description will now be made for the damping force characteristics of the damper 10.

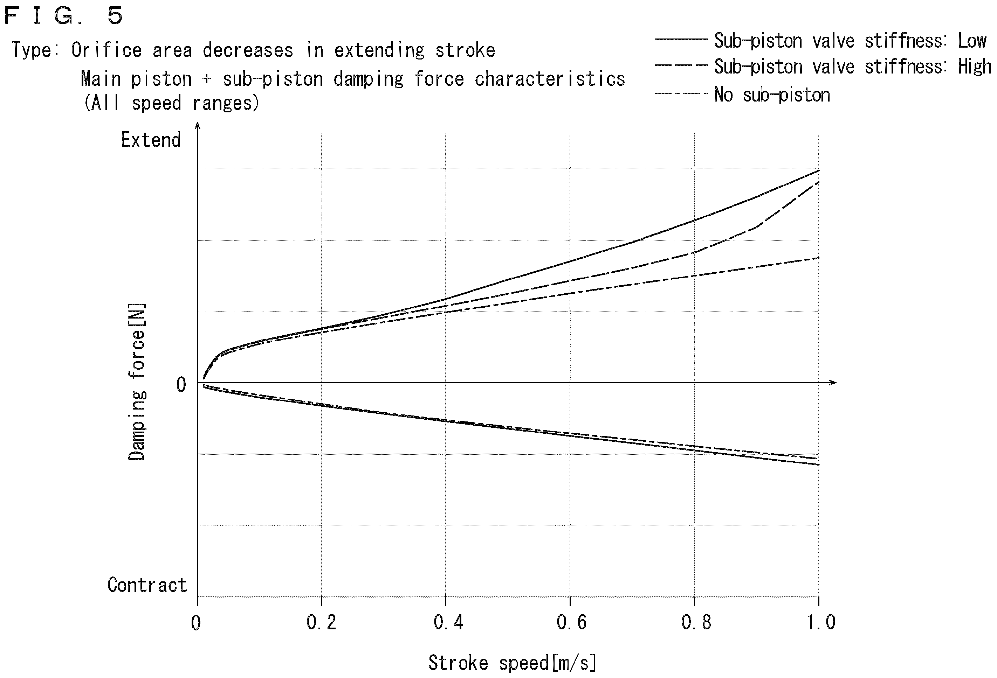

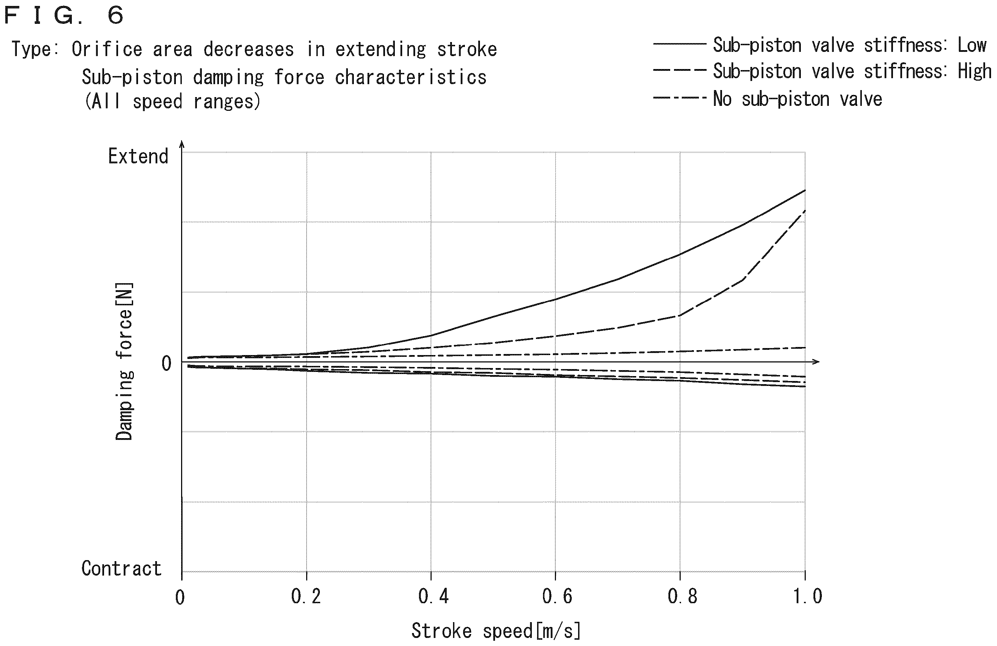

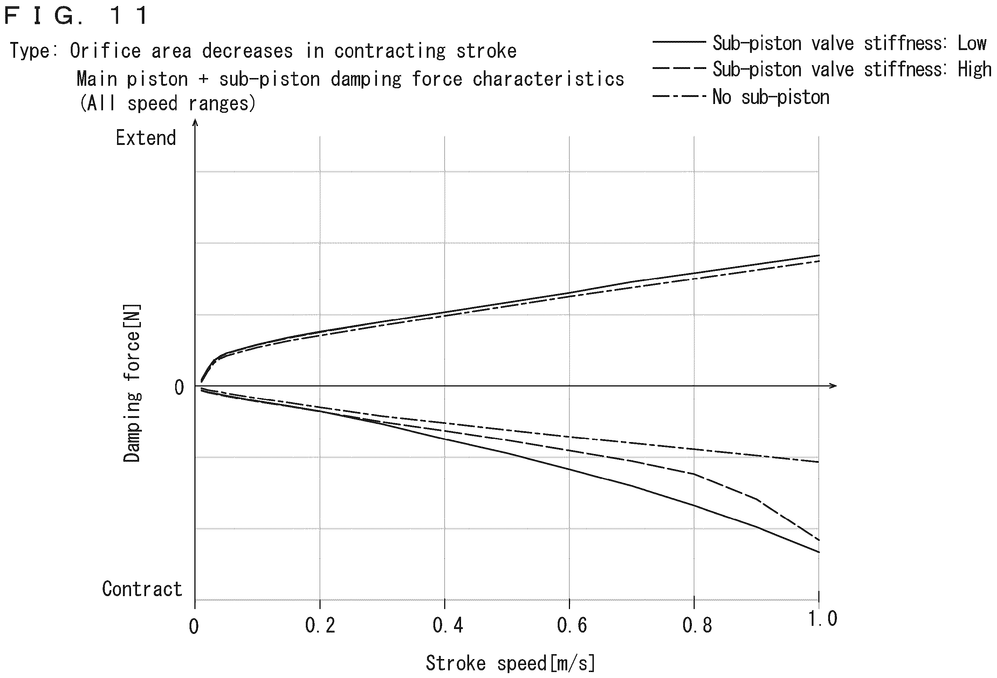

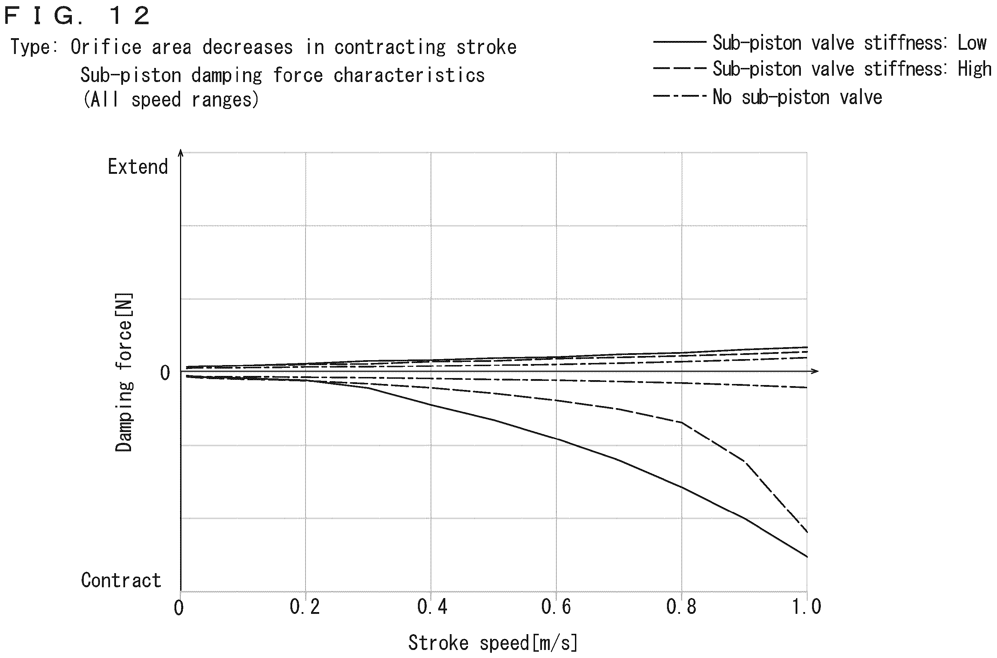

It should be noted here that Fig. 5 shows damping force characteristics of the damper 10 as a whole in all speed ranges from the very-low-speed range to the high-speed range, as main-piston + sub-piston damping force characteristics. The same applies to Fig. 11, Fig. 15, Fig. 20, Fig. 24 and Fig. 26. Fig. 6 through Fig. 8 show sub-piston damping force characteristics, i.e., damping force characteristics obtained by subtracting a damping force of the main piston 18 from the damping force of the damper 10 as a whole in the very-low-speed range, the low-speed range or the all speed ranges. The same applies to Fig. 12, Fig. 16, Fig. 21 through Fig. 23, Fig. 25 and Fig. 27. The damping force characteristic is a damping force with respect to a stroke speed of the main piston 18 and the sub-piston 20.

Also, in the graphs which show the damping force characteristics shown in Fig. 5 and thereafter, the very-low-speed range is a speed range not faster than 0.01m/s, the low-speed range is a speed range faster than 0.01m/s and not faster than 0.2m/s, and the high-speed range is a speed range faster than 0.2m/s.

As shown in Fig. 5, by using the sub-piston 20 together with the main piston 18, it becomes possible to make the damping force on the extending side (at the time of extending motion) greater than in the case where the main piston 18 is used but the sub-piston 20 is not used, and further, it becomes possible to make the damping force greater than on the contraction side (at the time of contracting motion). It should be noted here that in Fig. 5, two lines overlap each other on the contraction side, i.e., a solid line which shows a damping force characteristic when the valve 66 has a low stiffness overlaps a broken line which shows a damping force characteristic when the valve 66 has a high stiffness.

As shown in Fig. 6, in the high-speed range, as the stroke speed becomes faster, the valve 66 deflects in a direction to decrease the orifice area, so it is possible to increase the damping force. It is also possible to adjust the damping force in the high-speed range by adjusting the stiffness of the valve 66 in the second damping force generator 40. Specifically, it is possible to make the damping force greater in the high-speed range when the stiffness of the valve 66 is low rather than high. When the stiffness of the valve 66 is low rather than high, the valve 66 begins deflecting earlier. In addition, an amount of deflection of the valve 66 at a given stroke speed becomes larger, making the orifice area smaller, thereby generating a greater damping force.

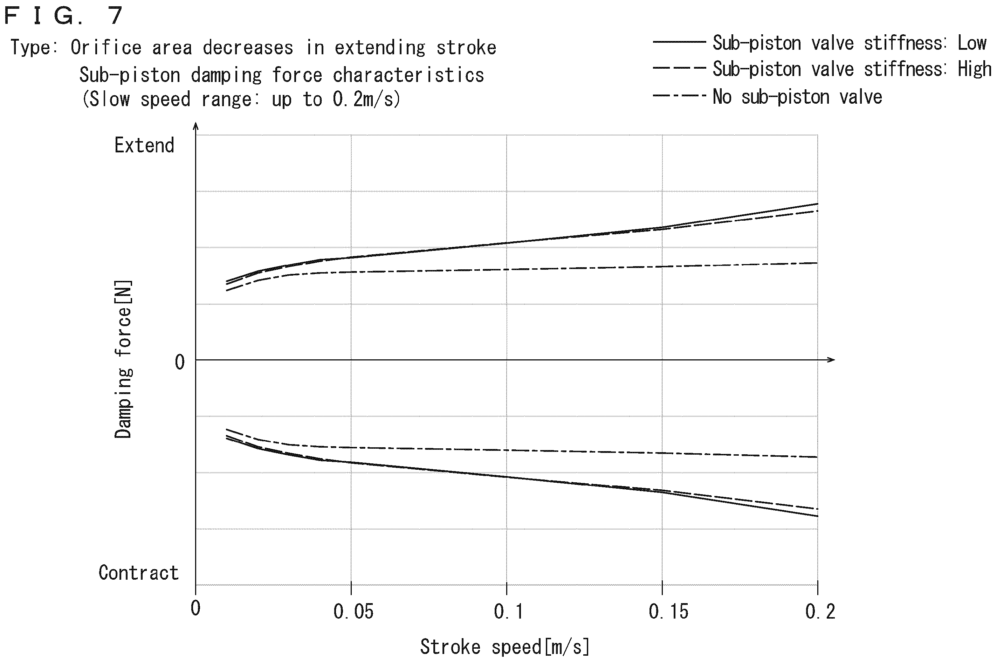

As shown in Fig. 7, in the low-speed range, the orifice 76 generates the damping force. Also, by setting the orifice area by means of the second damping force generator 40, it becomes possible to make the damping force greater in the low-speed range than in case where the valve 66 is not used. The damping force in the low-speed range is almost the same regardless of the stiffness of the valve 66. In the low-speed range, the valve 66 deflects very little regardless of the stiffness of the valve 66, making little change in the shape of the orifice 76, so there is little change in the orifice area.

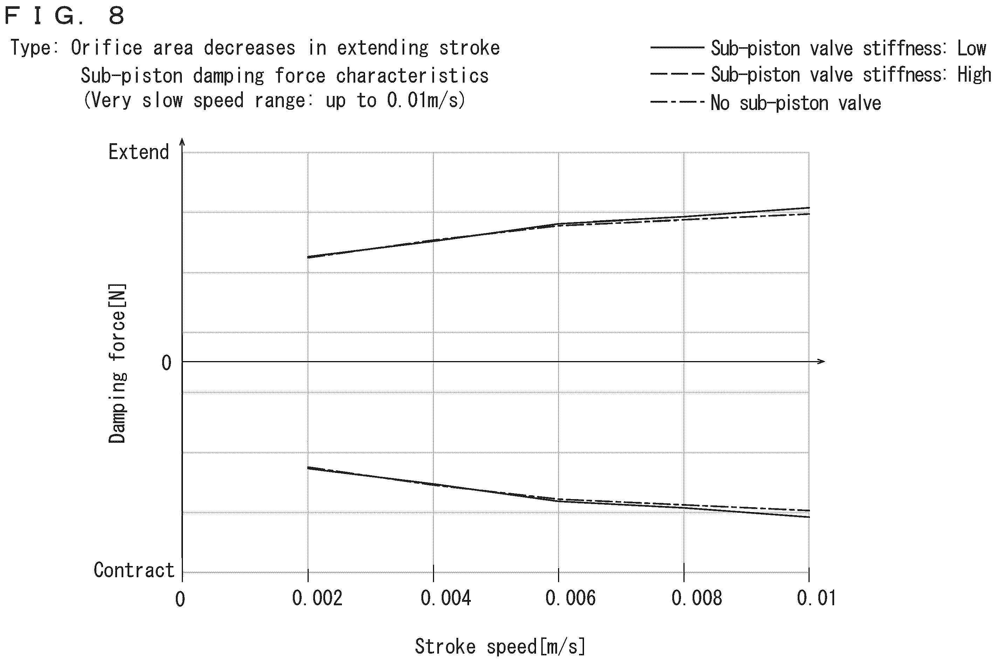

As shown in Fig. 8, the damping force in the very-low-speed range is substantially the same regardless of the presence/absence of the valve 66 and regardless of the stiffness of the valve 66. Namely, the damping force is not very much affected by the valve 66. In other words, in the very-low-speed range, the damping force is not very much affected by the orifice 76. The damping force in the very-low-speed range is generated by a friction force generated when the main piston 18 and the sub-piston 20 make sliding movements inside the cylinder 12, and by a resistance force generated when the hydraulic fluid moves in the flow path P (through-hole 50 and communication holes 52) inside the piston rod 42. The flow path between the valve portion 58 and the stopper 62 in the flow path P has a smaller flow path area than the orifice area of the orifice 76. Therefore, in the very-low-speed range, the second damping force generator 40 generates little damping force. It should be noted here that in Fig. 8, two lines overlap each other on the extending side and the contracting side, i.e., a solid line which shows a damping force characteristic when the valve 66 has a low stiffness overlaps a broken line which shows a damping force characteristic when the valve 66 has a high stiffness.

According to the damper 10 described thus far, the damping force is generated not only by the first damping force generators 30a, 30b provided in the main piston main body 26, but also by the second damping force generator 40 provided in the sub-piston main body 36. In the second damping force generator 40, the orifice 76 of the sub-piston 20 is set based on the outer diameter D1 of the valve 66 and the outer diameter D2 of the groove 64. In other words, there is set an orifice area which is co-related with the gap (distance) between the outer circumferential edge 72 of the valve 66 and the outer wall 74 of the groove 64. Now, with the orifice area, when the valve 66 has no deflection being called a static orifice area, the static orifice area becomes approximately constant when the stroke speed of the sub-piston 20 is in the low-speed range, and it is possible to adjust the damping force accordingly. When the size of the gap, i.e., the static orifice area, is large, the damping force is small. When the static orifice area is small, the damping force is large. In addition to the above, a setting is made to the stiffness of the valve 66. With this, it becomes possible to adjust the stroke speed of the sub-piston 20 at the time when the valve 66 starts deflecting. Now, with the orifice area which varies with the deflection of the valve 66 being called a variable orifice area, it is possible to adjust the damping force according to the variable orifice area and the stroke speed (flow speed of the hydraulic fluid) when the stroke speed of the sub-piston 20 is in the high-speed range. Further, the outer circumferential edge 72 of the valve 66 does not make contact with the main surface of the sub-piston main body 36 and the groove 64 regardless of the deflection of the valve 66. Therefore, even if the valve 66 makes a deflection, the orifice 76 of the sub-piston 20 is not fully closed, and hence it is possible to form an all-around flow path between the valve 66 and the sub-piston main body 36, and reduce a sharp increase in the damping force. Therefore, it is possible to appropriately adjust the damping force when the sub-piston 20 has a stroke speed ranging from the low-speed range to the high-speed range.

In addition to the above, the static orifice area is adjusted according to the height h of the support portion 70, whereby the damping force is adjusted when the stroke speed of the sub-piston 20 is in the low-speed range. If the height h of the support portion 70 is small, the gap between the outer circumferential edge 72 of the valve 66 and the outer wall 74 of the groove 64 is small, therefore the static orifice area is small, and the damping force is large. On the other hand, if the height h of the support portion 70 is large, the gap between the outer circumferential edge 72 of the valve 66 and the outer wall 74 of the groove 64 is large, therefore the static orifice area is large, and the damping force is small. An adjustment is also made to the position of a radially outward end E (see Fig. 3A, Fig. 3B and Fig. 4) of a region of the valve 66 supported by the sub-piston main body 36, in accordance with the outer diameter D3 of the support portion 70. The adjustment changes the amount of deflection of the valve 66 with respect to the stroke speed, resulting in stiffness adjustment in essence of the valve 66, whereby the damping force is adjusted when the stroke speed of the sub-piston 20 is in the high-speed range. As the outer diameter D3 of the support portion 70 increases, the region of the valve 66 supported by the sub-piston main body 36 increases and the amount of deflection of the valve 66 decreases, resulting in increased stiffness in essence of the valve 66. This makes it possible to cause the change in the damping force to be more gradual with respect to the stroke speed of the sub-piston 20. On the other hand, as the outer diameter D3 of the support portion 70 decreases, the region of the valve 66 supported by the sub-piston main body 36 decreases and the amount of deflection of the valve 66 increases, resulting in decreased stiffness in essence of the valve 66. This makes it possible to increase the change in the damping force with respect to the stroke speed of the sub-piston 20.

The outer diameter D1 of the valve 66 is smaller than the outer diameter D2 of the groove 64, and therefore when viewed from the axial direction of the piston rod 42, the valve 66 does not overlap the outer circumferential edge 75 of the groove 64, and thus there is formed the annular orifice 76, i.e., the orifice 76 which circles all around the circumference. If the annular orifice 76 has a large width, the static orifice area is large, and the damping force is small when the stroke speed of the sub-piston 20 is in the low-speed range. On the other hand, if the annular orifice 76 has a small width, the static orifice area is small, and the damping force is large when the stroke speed of the sub-piston 20 is in the low-speed range.

As the groove 64 extends deeper, the outer wall 74 of the groove 64 comes closer to the locus T1 of the outer circumferential edge 72 of the valve 66 at the time of deflection. Therefore, as the valve 66 deflects in the depth direction of the groove 64, the gap between the outer circumferential edge 72 of the valve 66 and the outer wall 74 of the groove 64 becomes smaller, i.e., the variable orifice area decreases. Therefore, it is possible to increase the change in the damping force with respect to the stroke speed when the stroke speed of the sub-piston 20 is in the high-speed range.

When the stroke speed of the sub-piston 20 is in the very-low-speed range, the hydraulic fluid moves through the flow path P which is formed inside piston rod 42 to provide communication between the first oil chamber H1 and the second oil chamber H2, making it possible to generate a damping force.

When the piston rod 42 is in the extending motion, the hydraulic fluid inside the cylinder 12 moves from the first end portion 14a side to the second end portion 14b side, to press the valve 66 toward the sub-piston main body 36, making the valve 66 deflect in accordance with the stroke speed of the sub-piston 20. This makes it possible to appropriately adjust the damping force at the time when the piston rod 42 is in the extending motion.

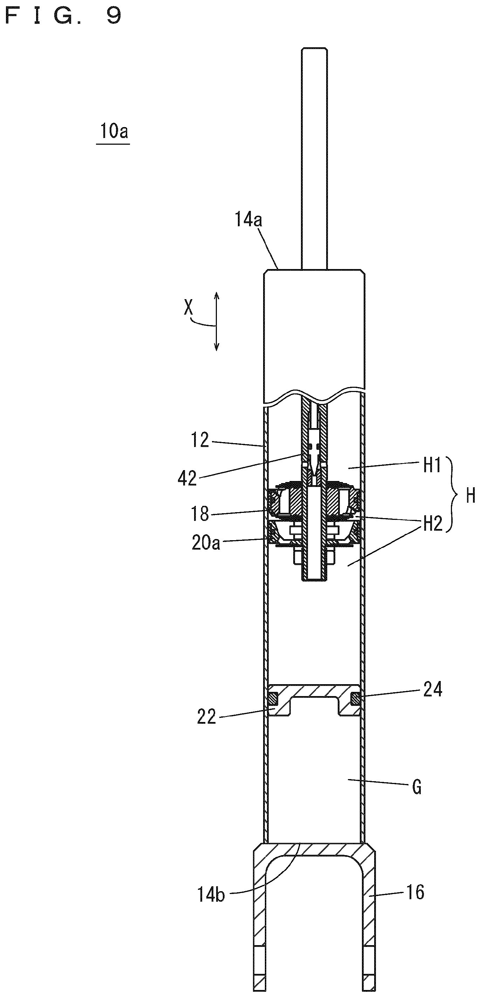

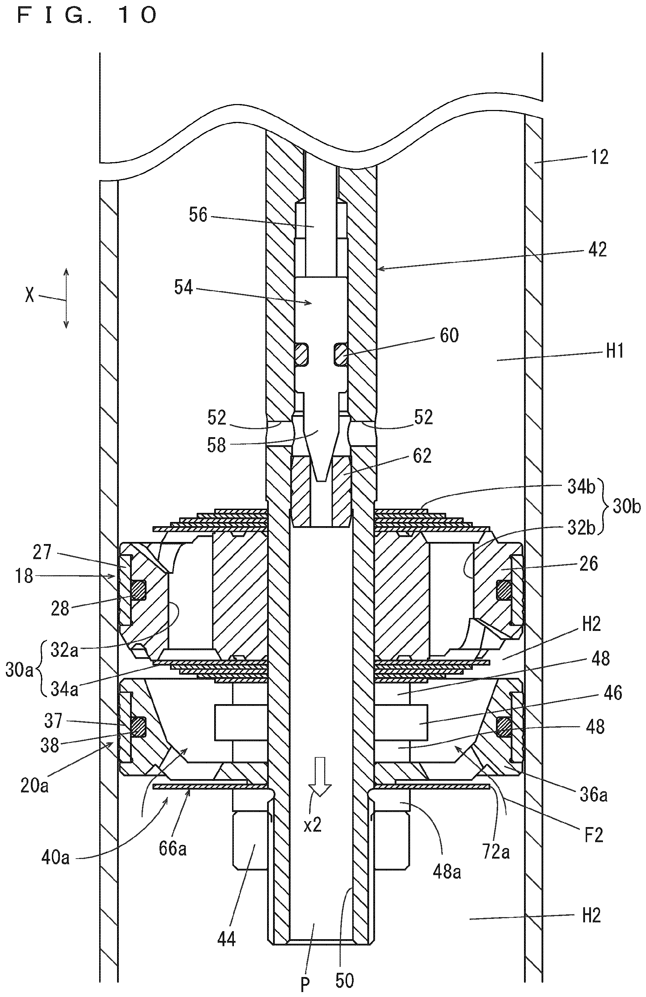

Next, description will be made for a damper 10a, which is another embodiment of the present invention, with reference to Fig. 9 and Fig. 10.

The damper 10a is a single-cylinder hydraulic damper of a type where the orifice area decreases in the contracting stroke. The damper 10a utilizes a sub-piston 20a in place of the sub-piston 20 used in the damper 10 according to the previous embodiment, and additionally utilizes a control washer 48a. The sub-piston 20a is the sub-piston 20 disposed upside down, i.e., flipped in an up-down direction, and includes a sub-piston main body 36a and a second damping force generator 40a. Therefore, the second damping force generator 40a has its valve 66a located more closely to the second end portion 14b of the cylinder 12 than the sub-piston main body 36a. The sub-piston 20a is attached to the piston rod 42 with a nut 44. When attached, a plain washer 46 and two control washers 48 are placed between the sub-piston main body 36a and the damping valve 34a. Further, a control washer 48a is placed between the valve 66a and the nut 44. The second damping force generator 40a functions when the damper 10a is in a contracting motion. When the sub-piston 20a moves in Direction x2, the hydraulic fluid moves in Direction F2. All the other configurations of the sub-piston 20a are identical with those in the sub-piston 20, so no repetitive description will be repeated here. Also, all the other configurations of the damper 10a are identical with those in the damper 10, so no repetitive description will be repeated here.

Description will now be made for the damping force characteristics of the damper 10a.

As shown in Fig. 11, by using the sub-piston 20a together with the main piston 18, it becomes possible to make the damping force on the contracting side greater than in the case where the main piston 18 is used but the sub-piston 20a is not used, and further, it becomes possible to make the damping force greater than on the extending side. It should be noted here that in Fig. 11 two lines overlap each other on the extending side, i.e., a solid line which shows a damping force characteristic when the valve 66a has a low stiffness overlaps a broken line which shows a damping force characteristic when the valve 66a has a high stiffness.

As shown in Fig. 12, in the high-speed range, the valve 66a deflects in a direction to decrease the variable orifice area in accordance with the stroke speed, so it is possible to increase the damping force. Also, by adjusting the stiffness of the valve 66a in the second damping force generator 40a, it is possible to adjust the damping force in the high-speed range. Specifically, it is possible to make the damping force greater in the high-speed range when the stiffness of the valve 66a is low rather than high.

In the low-speed range, the present embodiment has the damping force characteristics shown in Fig. 7, or the same damping force characteristics as provided by the damper 10. In the very-low-speed range, the present embodiment has the damping force characteristics shown in Fig. 8, or the same damping force characteristics as provided by the damper 10.

According to the damper 10a as described above, when the piston rod 42 is in the contracting motion, the hydraulic fluid inside the cylinder 12 moves from the second end portion 14b side to the first end portion 14a side, to press the valve 66a toward the sub-piston main body 36a, making the valve 66a deflect in accordance with the stroke speed of the sub-piston 20a. This makes it possible to appropriately adjust the damping force at the time when the piston rod 42 is in the contracting motion.

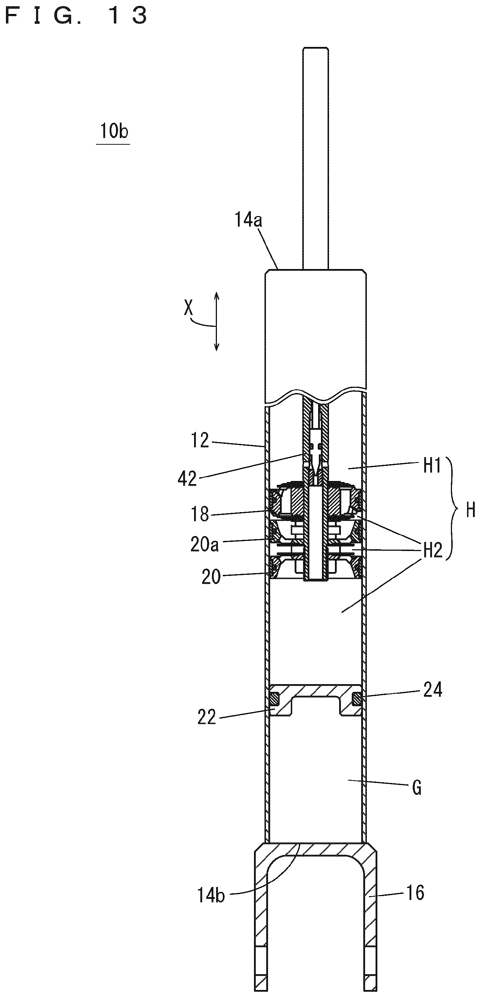

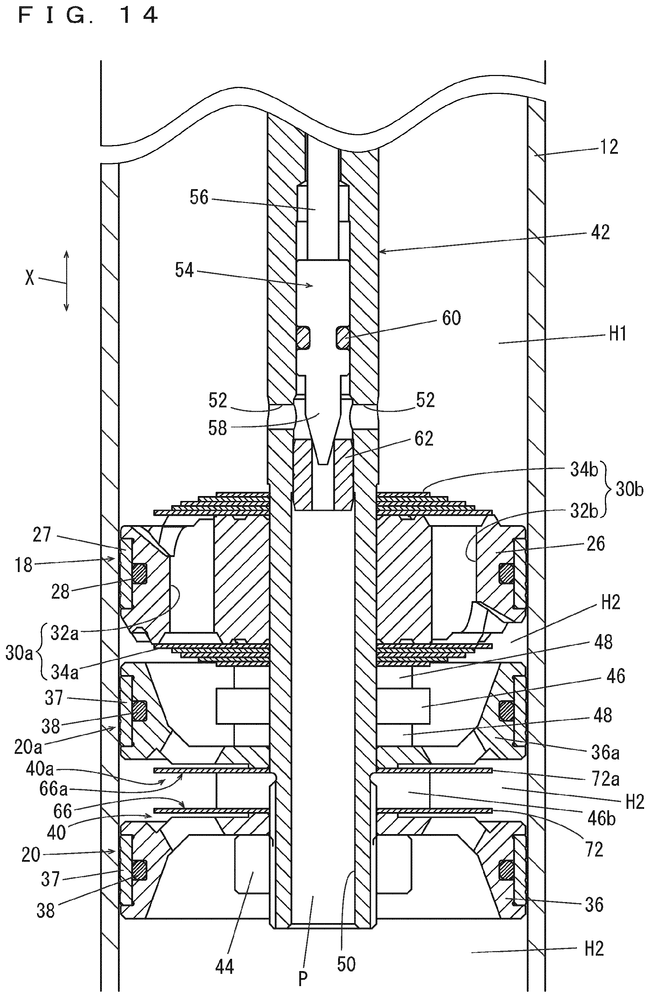

Next, description will be made for a damper 10b, which is still another embodiment of the present invention, with reference to Fig. 13 and Fig. 14.

The damper 10b is a single-cylinder hydraulic damper of a type where the orifice area decreases in the extending/contracting stroke. The damper 10b is the damper 10 further including the sub-piston 20a of the damper 10a and a plain washer 46b. The sub-piston 20a and the plain washer 46b are placed between the damping valve 34a and the valve 66. In other words, in the damper 10b the sub-piston 20 and the sub-piston 20a are provided serially, in a mutually upside down way, i.e., flipped in an up-down direction more closely to the second end portion 14b than the main piston 18. In the second damping force generator 40 of the sub-piston 20, the valve 66 is located more closely to the first end portion 14a of the cylinder 12 than the corresponding sub-piston main body 36, and in the second damping force generator 40a of the sub-piston 20a, the valve 66a is located more closely to the second end portion 14b of the cylinder 12 than the corresponding sub-piston main body 36a. A plain washer 46 and two control washers 48 are placed between the sub-piston main body 36a and the damping valve 34a. Further, the plain washer 46b is placed between the valves 66 and 66a. The second damping force generator 40 functions when the damper 10b is in an extending motion. The second damping force generator 40a functions when the damper 10b is in a contracting motion. Therefore, it is possible to generate a damping force in both of the extending/contracting motions, with the second damping force generators 40, 40a. All the other configurations of the damper 10b are identical with those in the damper 10, so no repetitive description will be repeated here.

Description will be made for the damping force characteristics of the damper 10b.

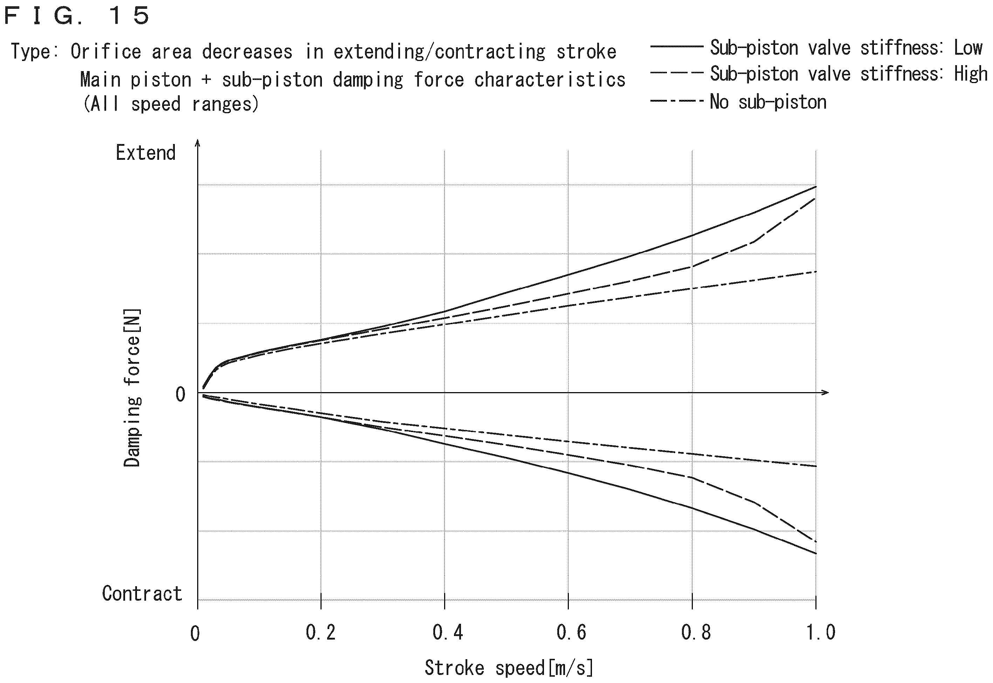

As shown in Fig. 15, by using the sub-pistons 20, 20a together with the main piston 18, it becomes possible to make the damping force both on the extending and contracting sides greater than in the case where the main piston 18 is used but the sub-pistons 20, 20a are not used.

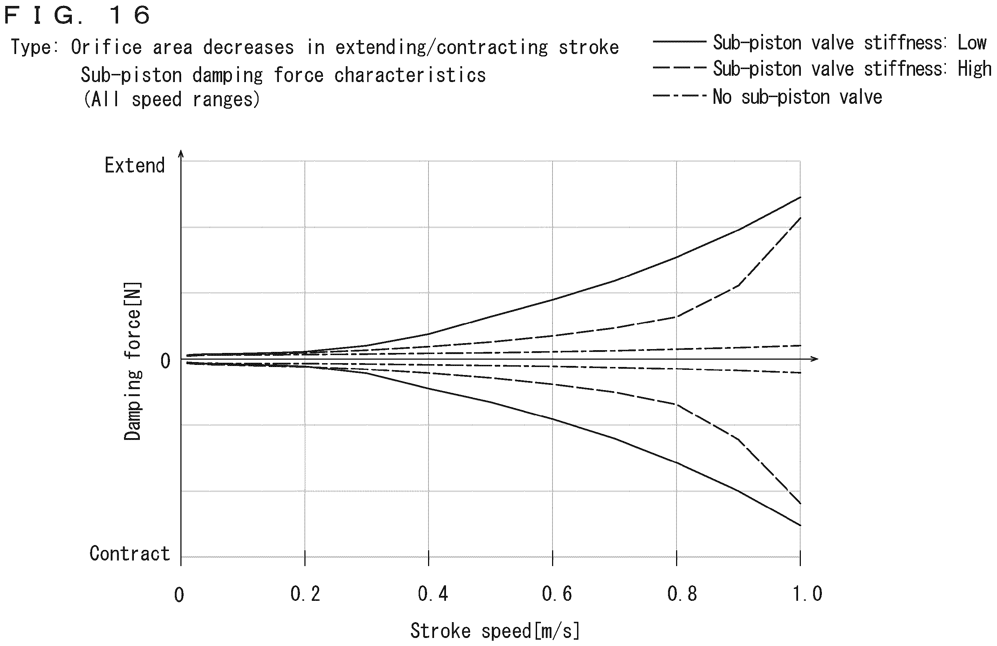

As shown in Fig. 16, in the high-speed range, the valves 66, 66a deflect in a direction to decrease the variable orifice area in accordance with the stroke speed, so it is possible to increase the damping force on both of the extending and contracting sides. Also, by adjusting the stiffness of the valves 66, 66a in the second damping force generators 40, 40a, it is possible to adjust the damping force in the high-speed range. Specifically, it is possible to make the damping force greater in the high-speed range when the stiffness of the valves 66, 66a is low rather than high.

In the low-speed range, the present embodiment has the damping force characteristics shown in Fig. 7, or the same damping force characteristics as provided by the damper 10. In the very-low-speed range, the present embodiment has the damping force characteristics shown in Fig. 8, or the same damping force characteristics as provided by the damper 10.

According to the damper 10b as described, when the piston rod 42 is in the extending motion, the hydraulic fluid inside the cylinder 12 moves from the first end portion 14a side to the second end portion 14b side in the sub-piston 20, to press the valve 66 toward the sub-piston main body 36, making the valve 66 deflect in accordance with the stroke speed of the sub-piston 20. This makes it possible to appropriately adjust the damping force at the time when the piston rod 42 is in the extending motion. Also, when the piston rod 42 is in the contracting motion, the hydraulic fluid inside the cylinder 12 moves from the second end portion 14b side to the first end portion 14a side in the other sub-piston 20a, to press the valve 66a toward the sub-piston main body 36a, making the valve 66a deflect in accordance with the stroke speed of the sub-piston 20a. This makes it possible to appropriately adjust the damping force at the time when the piston rod 42 is in the contracting motion. As described, it becomes possible to appropriately adjust the damping force at both of the times when the piston rod 42 is in the extending/contracting motions.

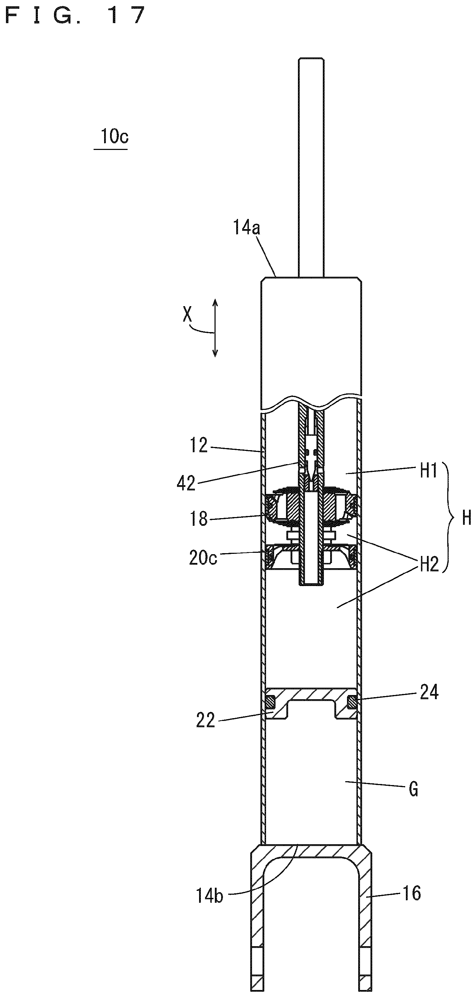

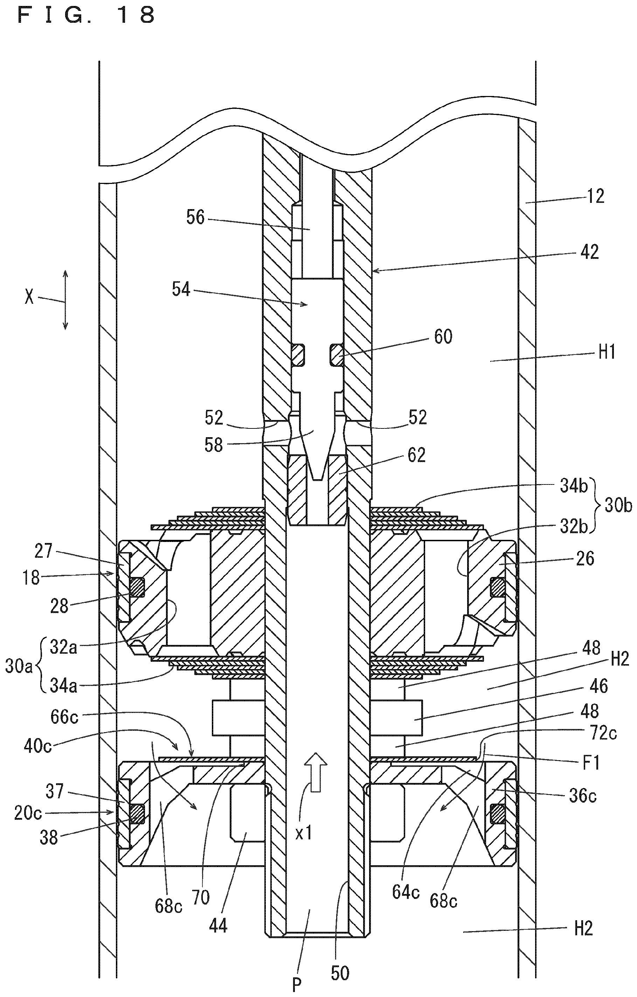

Description will be made for a damper 10c, which is still another embodiment of the present invention, with reference to Fig. 17 and Fig. 18.

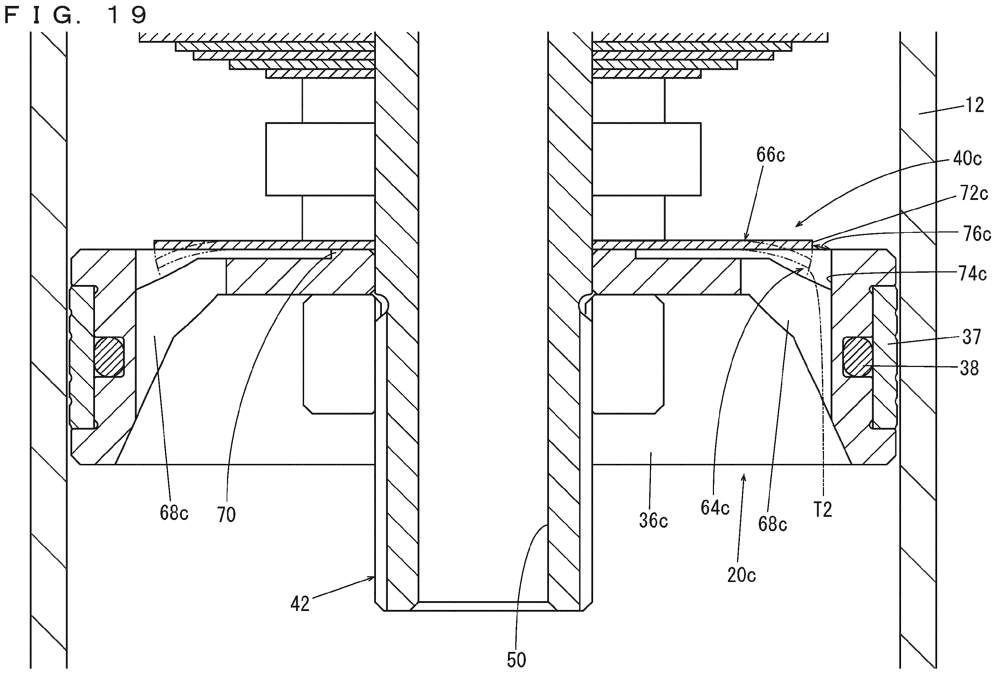

The damper 10c is a single-cylinder hydraulic damper of a type where the orifice area increases in the extending stroke. The damper 10c utilizes a sub-piston 20c in place of the sub-piston 20 used in the damper 10. The sub-piston 20c includes a sub-piston main body 36c and a second damping force generator 40c. The second damping force generator 40c is configured the same way as the second damping force generator 40 of the sub-piston 20, differing only in that it includes a groove 64c and ports 68c in place of the groove 64 and the ports 68. The sub-piston main body 36c is configured the same way as the sub-piston main body 36, differing only in that it is formed with a groove 64c and a port 68c in place of the groove 64 and the port 68. Referring to Fig. 19, a valve 66c of the second damping force generator 40c is provided so that an outer circumferential edge 72c of the valve 66c does not make contact with a main surface of the sub-piston main body 36c and the groove 64c regardless of deflection. In the present embodiment, an outer wall 74c of the groove 64c is perpendicular to the main surface of the sub-piston main body 36c, being farther away, as the groove 64c extends deeper, from a locus T2 of the outer circumferential edge 72c of the valve 66c at the time of deflection. Each port 68c leads to the groove 64c and is perpendicular (extending in the up-down direction) to the main surface of the sub-piston main body 36c. All the other configurations of the sub-piston 20c are identical with those in the sub-piston 20, so no repetitive description will be repeated here. Also, all the other configurations of the damper 10c are identical with those in the damper 10, so no repetitive description will be repeated here.

Description will be made for damping force characteristics of the damper 10c.

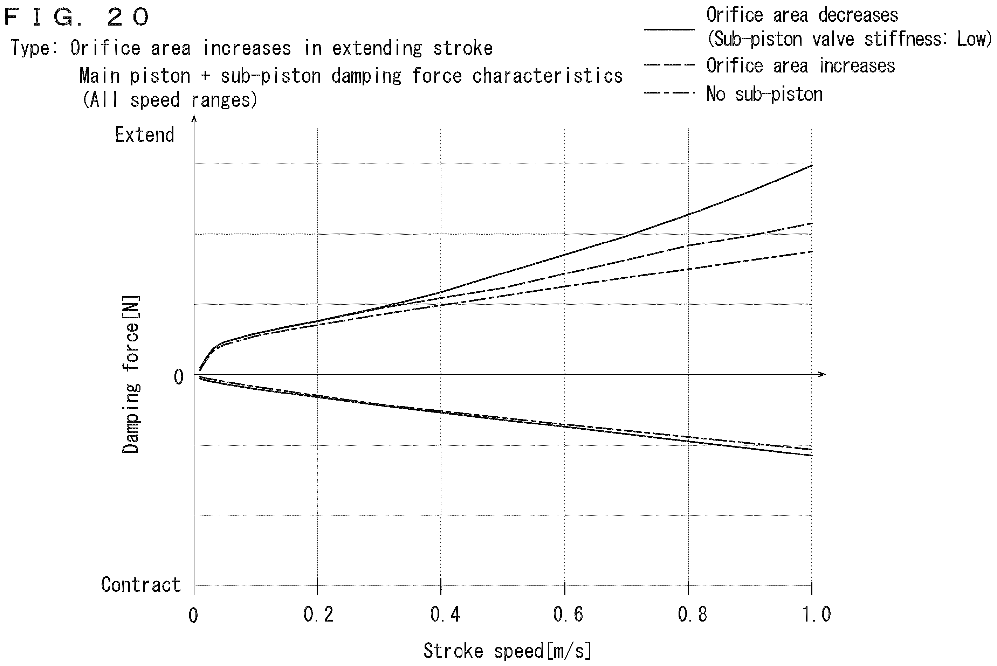

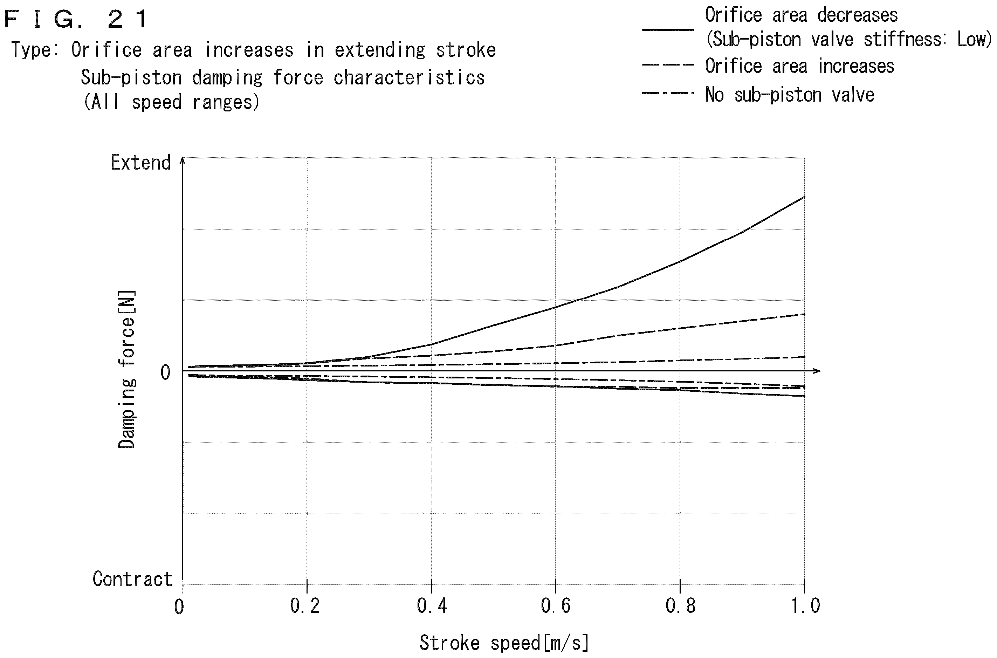

As shown in Fig. 20, by using the sub-piston 20c together with the main piston 18, it becomes possible to make the damping force on the extending side greater than in the case where the main piston 18 is used but the sub-piston 20c is not used, and further, it becomes possible to make the damping force greater than on the contracting side. It should be noted here that in Fig. 20, a damping force characteristic of a type where the orifice area decreases is given in a solid line for comparison. The same applies to Fig. 21 through Fig. 27. In Fig. 20, two lines overlap each other on the contracting side, i.e., a solid line which shows a damping force characteristic of the type where the orifice area decreases overlaps a broken line which shows a damping force characteristic of a type where the orifice area increases.

As shown Fig. 21, when the sub-piston 20c is used, the extending-side damping force increases in accordance with the stroke speed in the high-speed range. However, since the valve 66c deflects in the direction to increase the orifice area, the variable orifice area increases, reducing an increase in the damping force.

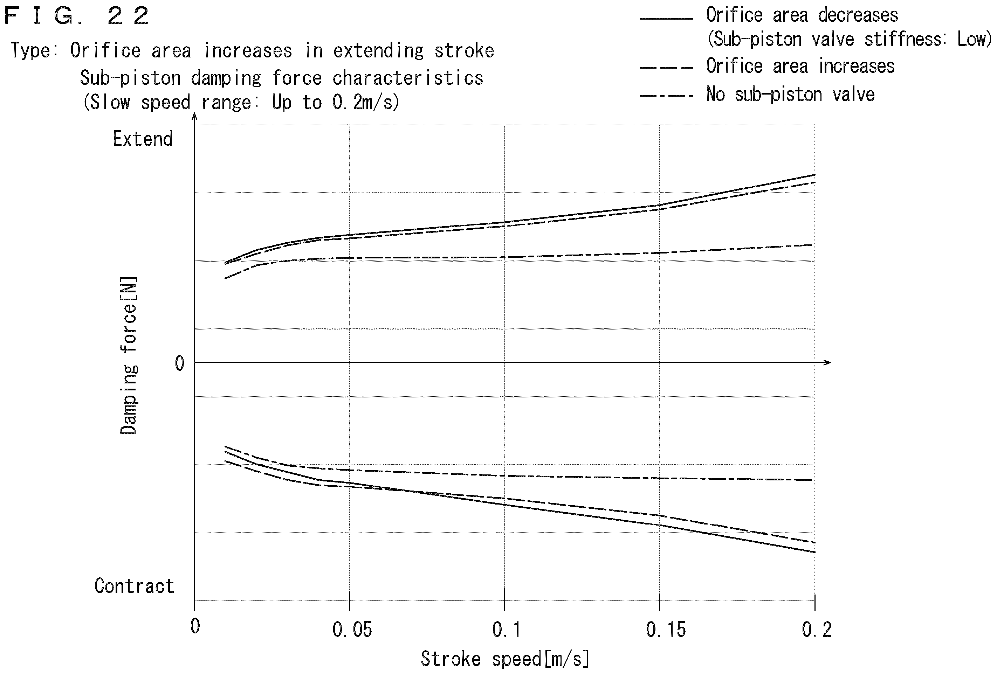

As shown in Fig. 22, in the low-speed range, the orifice 76c (see Fig. 19) generates the damping force. Also, by setting the static orifice area by means of the second damping force generator 40c, it becomes possible to make the damping force greater in the low-speed range than in the case where the valve 66c is not utilized. The damping force in the low-speed range is almost the same in both of the orifice-area increase type and the orifice-area decrease type. This is because the valve 66c deflects very little in the low-speed range, and therefore the orifice area changes little.

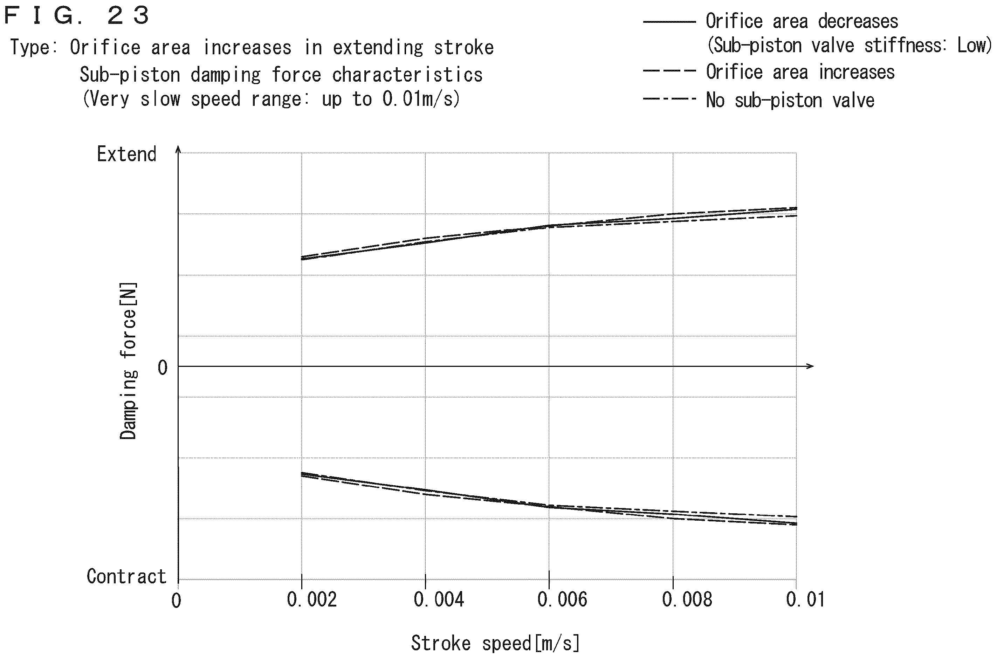

As shown in Fig. 23, the damping force in the very-low-speed range is substantially the same regardless of the presence/absence of the valve 66c and regardless of the orifice area type (increase/decrease). Namely, the damping force is not very much affected by the valve 66c. In other words, in the very-low-speed range, the damping force is not very much affected by the orifice 76c. The damping force in the very-low-speed range is generated by a friction force generated when the main piston 18 and the sub-piston 20c make sliding movements inside the cylinder 12, and by a resistance force generated when the hydraulic fluid moves in the flow path P (through-hole 50 and communication holes 52) inside the piston rod 42. The flow path between the valve portion 58 and the stopper 62 in the flow path P has a smaller flow path area than the orifice area of the orifice 76c. Therefore, in the very-low-speed range, the second damping force generator 40c generates little damping force.

According to the damper 10c as described, the outer wall 74c of the groove 64c becomes farther away, as the groove 64c extends deeper, from the locus T2 of the outer circumferential edge 72c of the valve 66c at the time of deflection. Therefore, as the valve 66c deflects in the depth direction of the groove 64c, the gap between the outer circumferential edge 72c of the valve 66c and the outer wall 74c of the groove 64c becomes greater, i.e., the variable orifice area increases. Therefore, it is possible to reduce the change in the damping force with respect to the stroke speed when the stroke speed of the sub-piston 20c is in the high-speed range.

Also, in the damper 10c shown in Fig. 17 and Fig. 18, the sub-piston 20c may be disposed upside down, i.e., flipped in an up-down direction, for use as a single-cylinder hydraulic damper of a type where an orifice area increases in the contracting stroke. In other words, in the damper 10a shown in Fig. 9 and Fig. 10, the sub-piston 20a may be replaced by the sub-piston 20c.

Description will now be made for the damping force characteristics of the present embodiment.

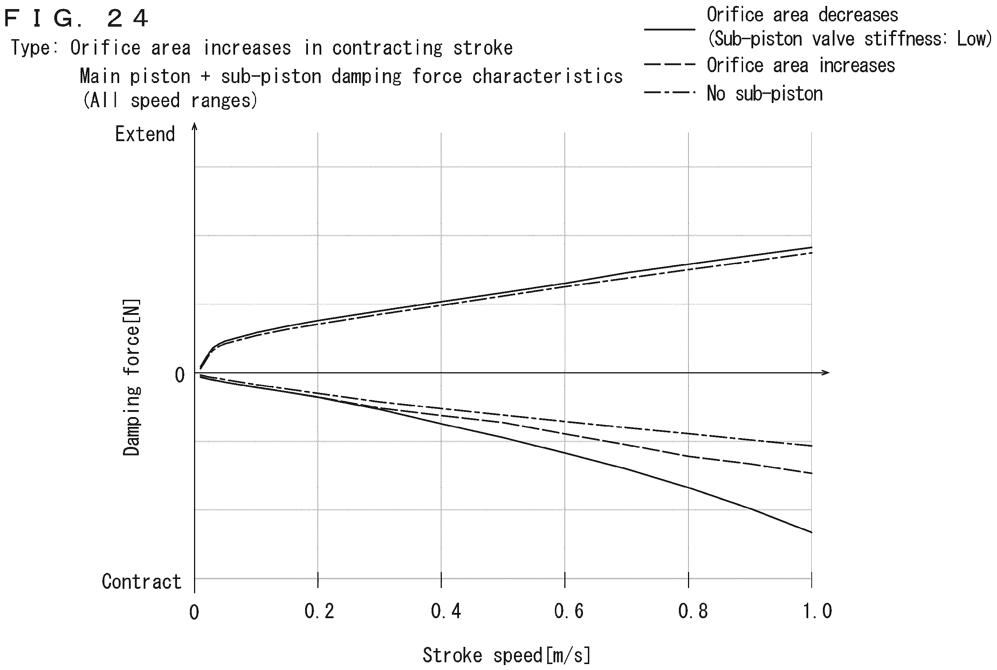

As shown in Fig. 24, by using the above-described sub-piston 20c together with the main piston 18, it becomes possible to make the damping force on the contracting side greater than in the case where the main piston 18 is used but the sub-piston 20c is not used, and further, it becomes possible to make the damping force greater than on the extending side. It should be noted here that in Fig. 24, two lines overlap each other on the extending side, i.e., a solid line which shows a damping force characteristic of the type where the orifice area decreases overlaps a broken line which shows a damping force characteristic of a type where the orifice area increases.

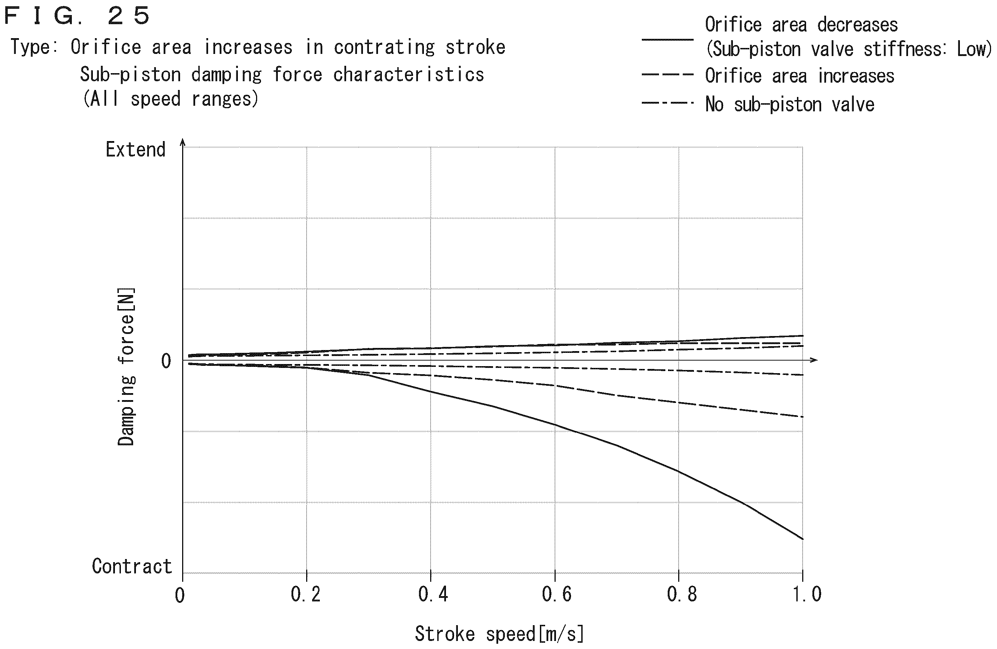

As shown Fig. 25, when the sub-piston 20c is used, the contracting-side damping force increases in accordance with the stroke speed in the high-speed range. However, since the valve 66c deflects in the direction to increase the orifice area, the variable orifice area increases, reducing an increase in the damping force.

In the low-speed range, the present embodiment has the damping force characteristics shown in Fig. 22, or the same damping force characteristics as provided by the damper 10c. In the very-low-speed range, the present embodiment has the damping force characteristics shown in Fig. 23, or the same damping force characteristics as provided by the damper 10c.

Further, there may be an arrangement in which one more sub-piston 20c included in the damper 10c in Fig. 17 and Fig. 18 is prepared, so that this additional sub-piston 20c is placed upside down, i.e., flipped in the up-down direction between the damping valve 34a and the valve 66c of the damper 10c. In other words, in place of the sub-piston 20 in the damper 10b shown in Fig. 13 and Fig. 14, the sub-piston 20c is utilized, and in place of the sub-piston 20a, the sub-piston 20c flipped in the up-down direction is utilized to provide a single-cylinder hydraulic damper of a type where the orifice area increases in the extending/contracting strokes. In this case, one sub-piston 20c functions at the time of the extending motion while the other, flipped sub-piston 20c functions at the time of the contracting motion. Therefore, it is possible to generate a damping force in both of the extending/contracting motions, with the two sub-pistons 20c.

Description will be made for the damping force characteristics of the present embodiment.

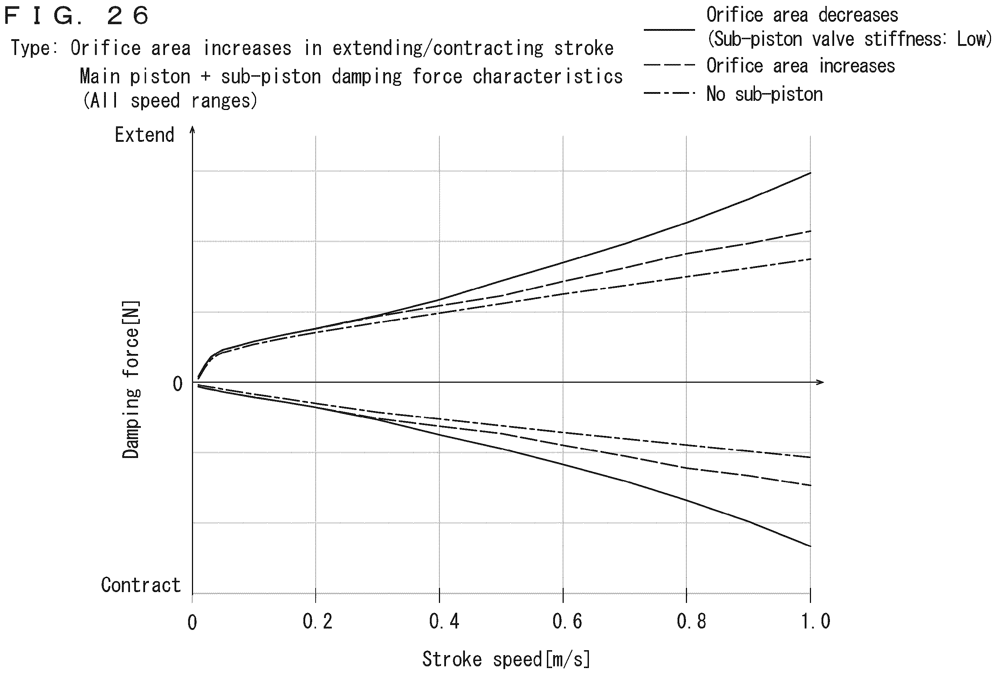

As shown in Fig. 26, by using the two sub-pistons 20c provided serially in a mutually upside down, i.e., flipped in an up-down direction, together with the main piston 18, it becomes possible to make the damping force both on the extending and contracting sides greater than in the case where the main piston 18 is used but the two sub-pistons 20c are not used.

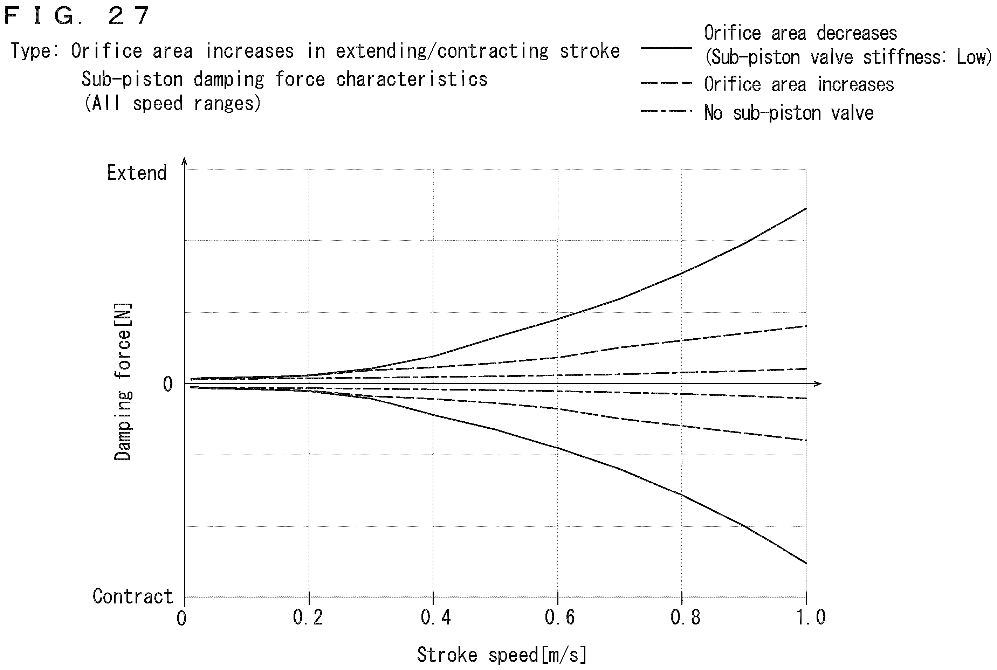

As shown Fig. 27, when the above-described two sub-pistons 20c are used, both the extending-side damping force and the contracting-side damping force increase in accordance with the stroke speed in the high-speed range. However, since the valve 66c deflects in the direction to increase the orifice area, the variable orifice area increases, reducing an increase in the damping force.

In the low-speed range, the present embodiment has the damping force characteristics shown in Fig. 22, or the same damping force characteristics as provided by the damper 10c. In the very-low-speed range, the present embodiment has the damping force characteristics shown in Fig. 23, or the same damping force characteristics as provided by the damper 10c.

It should be noted here that in the damper 10b, two valves 66, 66a are placed between the sub-piston main bodies 36, 36a. However, the present invention is not limited to this. For example, one valve may be placed between the sub-piston main bodies 36, 36a. Same applies to the embodiments in which the earlier described two sub-pistons 20c are utilized serially in a mutually flipped fashion.

In the embodiment described above, the sub-piston is provided between the main piston 18 and the second end portion 14b. However, the invention is not limited to this. For example, the sub-piston may be provided between the main piston 18 and the first end portion 14a.

In the embodiment described above, the second damping force generator has a support portion provided by a stepped portion. However, the support portion need not necessarily be provided.

In the embodiment described above, the damper is provided by a single-cylinder hydraulic damper. However the damper may be provided by a double-cylinder hydraulic damper.

The damper according to the present invention may be suitably applied to automobiles, motorcycles and any other vehicles.

The present invention being thus far described in terms of preferred embodiments, it is obvious that these may be varied in many ways within the scope and the spirit of the present invention. The scope of the present invention is limited only by the accompanied claims.

## Claims

1. A damper (10, 10a, 10b, 10c) comprising:
a cylinder (12) having a first end portion (14a) and a second end portion (14b);
a main piston (18) including a main piston main body (26) accommodated inside the cylinder (12) slidably in an axial direction of the cylinder (12) and dividing an inside of the cylinder (12) into a first oil chamber (H1) closer to the first end portion (14a) and a second oil chamber (H2) closer to the second end portion (14b), and a first damping force generator (30a, 30b) provided in the main piston main body (26);
a sub-piston (20, 20a, 20c) including a sub-piston main body (36, 36a, 36c) accommodated inside the cylinder (12) slidably in the axial direction of the cylinder (12) and a second damping force generator (40, 40a, 40c) provided in the sub-piston main body (36, 36a, 36c); and
a piston rod (42) attached to the main piston (18) and the sub-piston (20, 20a, 20c), and extending in the axial direction through the first end portion (14a) and out of the cylinder (12); wherein
the second damping force generator (40, 40a, 40c) includes
an annular groove (64, 64c) provided in a main surface of the sub-piston main body (36, 36a, 36c),
a disk-like valve (66, 66a, 66c) provided near the main surface of the sub-piston main body (36, 36a, 36c) in a manner to cover the groove (64, 64c), and
a port (68, 68c) provided in the groove (64, 64c) and penetrating the sub-piston main body (36, 36a, 36c);
the valve (66, 66a, 66c) is provided so that, regardless of deflection, an outer circumferential edge (72, 72a, 72c) of the valve (66, 66a, 66c) does not make contact with the sub-piston main body (36, 36a, 36c);
the sub-piston (20, 20a, 20c) has an orifice (76, 76c) based on an outer diameter of the valve (66, 66a, 66c) and an outer diameter of the groove (64, 64c) for adjustment of a damping force when a stroke speed of the sub-piston (20, 20a, 20c) is in a low-speed range; and
the valve (66, 66a, 66c) has a stiffness selected for adjustment of the damping force when the stroke speed of the sub-piston (20, 20a, 20c) is in a high-speed range.

2. The damper (10, 10a, 10b, 10c) according to Claim 1, wherein
the second damping force generator (40, 40a, 40c) further includes a support portion (70) provided in the main surface of the sub-piston main body (36, 36a, 36c) for supporting the valve (66, 66a, 66c),
the support portion (70) has a height selected for adjustment of the damping force when the stroke speed of the sub-piston (20, 20a, 20c) is in the low-speed range, and
the support portion (70) has an outer diameter selected for adjustment of the damping force when the stroke speed of the sub-piston (20, 20a, 20c) is in the high-speed range.

3. The damper (10, 10a, 10b, 10c) according to Claim 1 or 2, wherein the valve's (66, 66a, 66c) outer diameter (D1) is smaller than the groove's (64, 64c) outer diameter (D2).

4. The damper (10, 10a, 10b) according to one of Claims 1 through 3, wherein the groove (64) has an outer wall (74) that extends closer, as the groove (64) extends deeper, to a locus (T1) of the outer circumferential edge (72, 72a) of the valve (66, 66a) at a time of deflection.

5. The damper (10c) according to one of Claims 1 through 3, wherein the groove (64c) has an outer wall that extends farther, as the groove (64c) extends deeper, from a locus (T2) of the outer circumferential edge (72c) of the valve (66c) at a time of deflection.

6. The damper (10, 10a, 10b, 10c) according to one of Claims 1 through 5, further comprising a flow path (P) formed inside the piston rod (42) to provide communication between the first oil chamber (H1) and the second oil chamber (H2) for generation of a damping force when the stroke speed of the sub-piston (20, 20a, 20c) is in a very-low-speed range.

7. The damper (10, 10a, 10b, 10c) according to one of Claims 1 through 6, wherein the valve (66, 66a, 66c) is closer to the first end portion (14a) of the cylinder (12) than the sub-piston main body (36, 36a, 36c) is to the first end portion (14a) of the cylinder (12).

8. The damper (10, 10a, 10b, 10c) according to one of Claims 1 through 6, wherein the valve (66, 66a, 66c) is closer to the second end portion (14b) of the cylinder (12) than the sub-piston main body (36, 36a, 36c) is to the second end portion (14b) of the cylinder (12).

9. The damper (10b) according to one of Claims 1 through 6, comprising two of the sub-pistons (20, 20a), wherein
the valve (66) is closer to the first end portion (14a) of the cylinder (12) than the sub-piston main body (36) in one of the sub-pistons (20, 20a) is to the first end portion (14a) of the cylinder (12), and
the valve (66a) is closer to the second end portion (14b) of the cylinder (12) than the sub-piston main body (36a) in the other of the sub-pistons (20, 20a) is to the second end portion (14b) of the cylinder (12).
